# EUROPEAN PATENT SPECIFICATION

(11) **EP 2 644 953 B1**
(45) Date of publication and mention of the grant of the patent: **18.09.2019**
(21) Application number: 13161477.8
(22) Date of filing: 27.03.2013
(51) Int. Cl.: F16K 11/078, E03C 1/04

(54) **Water mixing valve device**
Wassermischventilvorrichtung
Dispositif à soupape de mélange d'eau

(30) Priority: 29.03.2012 JP 2012077383; 31.01.2013 JP 2013017404
(43) Date of publication of application: 02.10.2013
(73) Proprietor: Toto Ltd., Kitakyushu-shi, Fukuoka 802-8601 (JP)
(72) Inventor: Nishimura, Ryuichi, Kitakyushu-shi, Fukuoka 802-8601 (JP); Taniguchi, Takahiro, Kitakyushu-shi, Fukuoka 802-8601 (JP)
(74) Representative: Bandpay & Greuter

(56) References cited:
- EP-A2- 0 263 811
- DE-A1- 3 309 339
- GB-A- 2 156 495
- JP-A- 2010 185 569

## Description

### BACKGROUND OF THE INVENTION

### (1) Field of the Invention

The present invention relates to water mixing valve devices, and in particular to a water mixing valve device built in a water mixing faucet and capable of discharging or stopping discharging mixed water in which hot water supplied from a hot-water supply source and cold water supplied from a cold-water supply source are mixed.

### (2) Description of Related Art

Conventionally, as a water mixing valve device built in a water mixing faucet and capable of discharging or stopping discharging mixed water in which hot water supplied from a hot-water supply source and cold water supplied from a cold-water supply source are mixed, there have been known those disposed within a single-lever water mixing faucet, and provided with a stationary valve element having a hot water channel and a cold water channel respectively allowing hot water supplied from a hot-water supply source and cold water supplied from a cold-water supply source to pass therethrough, a movable valve element provided slidably with respect to the stationary valve element to form a hot/cold water passage unit, and an operating lever that causes the movable valve element to move for opening or closing, as described in Japanese Unexamined Utility Model Application Publication No. S60-86675, Japanese Unexamined Utility Model Application Publication No. S55-92964, and Japanese Unexamined Patent Application Publication No. 2010-185569, for example.

In such a conventional water mixing valve device, when the operating lever attached to the movable valve element is turned by a turning operation upward and downward, it is possible to control a flow rate of mixed water downstream of the stationary valve element by the movable valve element moving between a predetermined valve-closed position at which the hot water channel and the cold water channel of the stationary valve element are closed and a predetermined valve-opening position at which the hot water channel and/or the cold water channel are opened. Further, when the operating lever is turned by the turning operation within a predetermined operation range in a horizontal direction while the movable valve element is at the valve-opening position, the movable valve element slides with respect to the stationary valve element so as to change an opening cross-sectional area of the hot water channel and the cold water channel of the stationary valve element, a ratio of hot water and cold water mixed in the hot/cold water passage unit in the movable valve element is controlled, and whereby the temperature of mixed water discharged from a water outlet of the water mixing faucet can be adjusted.

In particular, according to the water mixing valve device described in Japanese Unexamined Patent Application Publication No. 2010-185569, only cold water is discharged from the water outlet of the water mixing faucet in a state in which the operating lever is positioned at a frequently-used discharge operation position in front of and in center in the horizontal direction of the water mixing faucet. Further, the hot water channel and the cold water channel of the stationary valve element are arranged symmetrically taking a center line extending along a front-back direction of the stationary valve element as a symmetry axis, and when the operating lever is turned by the turning operation within the operation range in a plane parallel to a sliding surface of the stationary valve element to adjust the temperature of the mixed water, the movable valve element is caused to turn and slide along an upper surface of the stationary valve element regardless of whether the movable valve element is opened or closed.

However, in the conventional water mixing valve device described in Japanese Unexamined Patent Application Publication No. 2010-185569, in a state in which the operating lever is positioned at a frequently-used discharge operation position in front of and in center in the horizontal direction of the water mixing faucet to allow only water to be discharged from the water outlet of the water mixing faucet, the hot/cold water passage unit of the movable valve element is required to communicate only with the cold water channel of the stationary valve element when the movable valve element is at the valve-opening position, and the hot/cold water passage unit of the movable valve element is required to communicate with neither of the hot water channel and the cold water channel of the stationary valve element when the movable valve element is at the valve-closed position, even if the movable valve element turns and slides with respect to the stationary valve element. Accordingly, the hot water channel of the stationary valve element has to be designed to be relatively narrow, or to be disposed spaced apart from a central axis of the casing extending along the front-back direction of the stationary valve element. This adversely results in, when discharging hot water from the water outlet of the water mixing faucet by positioning the operating lever at a discharge operation position on a hot-water side, a decreased flow rate of hot water passing through the hot water channel of the stationary valve element by an amount of narrowing of the hot water channel of the stationary valve element.

Further, in discharging hot water from the water outlet of the water mixing faucet, if the flow rate of hot water passing through the hot water channel of the stationary valve element is decreased, a flow rate of water passing through a water heater upstream the hot water channel of the stationary valve element does not adversely reach a flow rate minimum required to ignite the water heater, and hot water may not be adversely supplied from the water heater to the hot water channel of the stationary valve element.

### SUMMARY OF THE INVENTION

An object of the present invention is thus to provide, in order to address the above problems of the conventional techniques, a user-friendly water mixing valve device capable of discharging only water at a frequently-used discharge operation position while securing a sufficient amount of water to be discharged from a water outlet of a water mixing faucet, and increasing a flow rate of hot water passing through a hot water channel of a stationary valve element when opening a movable valve element to discharge mixed water.

In order to achieve the above object, the present invention provides a water mixing valve device built within a water mixing faucet, and configured to either discharge or stop discharging mixed water in which hot water supplied from a hot-water supply source and cold water supplied from a cold-water supply source are mixed, the water mixing valve device comprising: a casing disposed upstream of a water outlet of the water mixing faucet; a stationary valve element fixed within the casing, and having a hot water channel through which hot water supplied from the hot-water supply source flows and a cold water channel through which cold water supplied from the cold-water supply source flows; a movable valve element disposed within the casing, configured to slide with respect to the stationary valve element to open and close the hot water channel and the cold water channel of the stationary valve element, and having therein a hot/cold water passage unit for letting hot water and cold water that have respectively passed through the hot water channel and the cold water channel to pass therethrough; and an operating unit having one end attached to the movable valve element such that the movable valve element is moved and an open/close operation of the movable valve element is performed to switch between water discharge and water shutoff, the operating unit adjusting a flow rate of mixed water downstream of the stationary valve element by the movable valve element moving between a predetermined valve-closed position for closing the hot water channel and the cold water channel of the stationary valve element and a predetermined valve-opening position for opening the hot water channel and/or the cold water channel by being operated in a plane vertical to a sliding surface of the movable valve element, the operating unit controlling a ratio of hot water and cold water mixed in the hot/cold water passage unit of the movable valve element to adjust temperature of the mixed water discharged from the water outlet of the water mixing faucet by a turning operation of the operating unit within an operation range in a plane parallel to the sliding surface of the movable valve element when the movable valve element is at the valve-opening position, wherein the movable valve element is provided within the casing so as to slide, when the turning operation of the operating unit is performed, with respect to the stationary valve element in a sliding range in which an area of opening the movable valve element is larger than an area of closing the movable valve element, and the hot water channel and the cold water channel of the stationary valve element are provided asymmetrically from each other with respect to a central axis of the casing extending in a front-back direction of the stationary valve element such that a maximum distance between the central axis and the hot water channel is smaller than a maximum distance between the central axis and the cold water channel.

According to the present invention thus configured, the sliding range of the movable valve element with respect to the stationary valve element when the turning operation of the operating unit is performed in a state in which the movable valve element is closed can be more restricted as compared to a state in which the movable valve element is opened. Accordingly, it is possible to prevent the movable valve element in the closed state from opening the hot water channel and the cold water channel of the stationary valve element by the turning operation of the operating unit. Therefore, when the turning operation of the operating unit is performed in the state in which the movable valve element is closed, respective flow channels in the hot water channel and the cold water channel of the stationary valve element can be set to be larger than those in a state in which the sliding range of the movable valve element with respect to the stationary valve element is less restricted than the state in which the movable valve element is opened. Further, as the hot water channel and the cold water channel of the stationary valve element are provided asymmetrically from each other with respect to the central axis of the casing such that the maximum distance between the central axis extending in the front-back direction of the stationary valve element and the hot water channel is smaller than the maximum distance between the central axis of the casing and the cold water channel, the hot water channel of the stationary valve element can be positioned closer to the central axis the casing. Therefore, as compared to the case in which the hot water channel of the stationary valve element is not positioned closer to the central axis of the casing, it is possible to increase a flow rate of hot water that flows through the hot water channel of the stationary valve element when opening the movable valve element to discharge mixed water. Thus, the water mixing faucet device according to the present invention is user friendly, as being capable of discharging only cold water while securing a sufficient amount of water to be discharged from the water outlet of the water mixing faucet at the frequently-used discharge operation position, as well as of increasing a flow rate of hot water that flows through the hot water channel of the stationary valve element when opening the movable valve element to discharge mixed water. As used herein, the central axis of the casing refers to a line extending from a point assumed as its front side, which is a most frequently-used position in a normal usage of the water mixing valve device and at which a user faces toward the device, to a point behind the device passing a central point of the casing, that is, on a side opposite of the user.
Here, if the water mixing valve device is installed on the wall and such, a vertically downward direction that is most frequently-used is assumed to be the front side, and a line extending in a vertically upward direction from this point passing the central point of the casing is referred to as the central axis of the casing.

Further, the present invention provides a water mixing valve device built within a water mixing faucet, and configured to either discharge or stop discharging mixed water in which hot water supplied from a hot-water supply source and cold water supplied from a cold-water supply source are mixed, the water mixing valve device comprising: a casing disposed upstream of a water outlet of the water mixing faucet; a stationary valve element fixed within the casing, and having a hot water channel through which hot water supplied from the hot-water supply source flows and a cold water channel through which cold water supplied from the cold-water supply source flows; a movable valve element disposed within the casing, configured to slide with respect to the stationary valve element to open and close the hot water channel and the cold water channel of the stationary valve element, and having therein a hot/cold water passage unit for letting hot water and cold water that have respectively passed through the hot water channel and the cold water channel to pass therethrough; and an operating unit having one end attached to the movable valve element such that the movable valve element is moved and an open/close operation of the movable valve element is performed to switch between water discharge and water shutoff, the operating unit adjusting a flow rate of mixed water downstream of the stationary valve element by the movable valve element moving between a predetermined valve-closed position for closing the hot water channel and the cold water channel of the stationary valve element and a predetermined valve-opening position for opening the hot water channel and/or the cold water channel by being operated in a plane vertical to a sliding surface of the movable valve element, the operating unit controlling a ratio of hot water and cold water mixed in the hot/cold water passage unit of the movable valve element to adjust temperature of the mixed water discharged from the water outlet of the water mixing faucet by a turning operation of the operating unit within an operation range in a plane parallel to the sliding surface of the movable valve element when the movable valve element is at the valve-opening position, wherein the movable valve element is provided within the casing so as to slide, when the turning operation of the operating unit is performed, with respect to the stationary valve element in a sliding range in which an area of opening the movable valve element is larger than an area of closing the movable valve element, the stationary valve element includes a first region and a second region, the first region being defined so as to be enclosed by a cold water channel inner edge provided within the cold water channel on a central side of the casing, a central axis of the casing extending in the front-back direction of the stationary valve element, and a perpendicular line from one end of the cold water channel inner edge to the central axis, the second region being provided symmetrically with respect to the first region taking the central axis as a symmetry axis, and at least a portion of the hot water channel of the stationary valve element is within the second region.

According to the present invention thus configured, when the turning operation of the operating unit is performed in the state in which the movable valve element is closed, the sliding range of the movable valve element with respect to the stationary valve element can be more restricted as compared to the state in which the movable valve element is opened. Accordingly, it is possible to prevent the movable valve element in the closed state from opening the hot water channel and the cold water channel of the stationary valve element by the turning operation of the operating unit. Therefore, when the turning operation of the operating unit is performed in the state in which the movable valve element is closed, respective flow channels in the hot water channel and the cold water channel of the stationary valve element can be set to be larger than those in the state in which the sliding range of the movable valve element with respect to the stationary valve element is less restricted than the state in which the movable valve element is opened. In addition, in the stationary valve element, the first region is provided so as to be enclosed by the cold water channel inner edge provided within the cold water channel on the central side of the casing, the central axis extending in the front-back direction of the stationary valve element, and the perpendicular line from one end of the cold water channel inner edge of the cold water channel of the stationary valve element to the central axis of the casing, and the second region is provided symmetrically with respect to the first region taking the central axis of the casing as the symmetry axis, and at least a portion of the hot water channel of the stationary valve element is within the second region. Accordingly, the hot water channel of the stationary valve element can be positioned closer to the central axis of the casing without providing the hot water channel and the cold water channel of the stationary valve element symmetrically with respect to the central axis of the casing. Therefore, as compared to the case in which the hot water channel of the stationary valve element is not positioned closer to the central axis of the casing, it is possible to increase a flow rate of hot water that flows through the hot water channel of the stationary valve element when opening the movable valve element to discharge mixed water. Thus, the water mixing faucet device according to the present invention is user friendly, as being capable of discharging only cold water while securing a sufficient amount of water to be discharged from the water outlet of the water mixing faucet at the frequently-used discharge operation position, as well as of increasing a flow rate of hot water that flows through the hot water channel of the stationary valve element when opening the movable valve element to discharge mixed water.

In the present invention, preferably, the hot/cold water passage unit of the movable valve element includes a cold water channel side edge provided for the stationary valve element on a side of the cold water channel and a hot water channel side edge provided for the stationary valve element on a side of the hot water channel so as to face against the cold water channel side edge, the stationary valve element further includes a third region and a fourth region, the third region being defined so as to be enclosed by the cold water channel side edge of the hot/cold water passage unit of the movable valve element, the central axis, and the perpendicular line, the fourth region being provided symmetrically with respect to the third region taking the central axis as a symmetry axis, and at least a portion of the hot water channel side edge of the hot/cold water passage unit of the movable valve element is within the fourth region.

According to the present invention thus configured, the stationary valve element includes the third region provided so as to be enclosed by the cold water channel side edge of the hot/cold water passage unit of the movable valve element, the central axis of the casing, and the perpendicular line from one end of the cold water channel inner edge of the cold water channel of the stationary valve element to the central axis of the casing, and the fourth region provided symmetrically with respect to the third region taking the central axis of the casing as the symmetry axis. Further, at least a portion of the hot water channel side edge of the hot/cold water passage unit of the movable valve element is within the fourth region. Accordingly, the hot water channel of the stationary valve element can be positioned further closer to the central axis of the casing without providing the hot water channel and the cold water channel of the stationary valve element symmetrically with respect to the central axis of the casing. Therefore, as compared to the case in which the hot water channel of the stationary valve element is not positioned closer to the central axis of the casing, when opening the movable valve element to discharge mixed water, it is possible to increase the area of the portion through which the hot water channel of the stationary valve element and the hot/cold water passage unit of the movable valve element are communicated with each other, and to further increase the flow rate of hot water that flows from the hot water channel of the stationary valve element to the hot/cold water passage unit of the movable valve element.

In the present invention, preferably, the hot water channel of the stationary valve element includes a mixed water passage side edge provided for the movable valve element on a side of the hot/cold water passage unit, and when the open/close operation of the movable valve element is performed in a state in which the operating unit is turned by the turning operation to a front side of the casing in the plane parallel to the sliding surface of the movable valve element, a distance between the mixed water passage side edge and the hot water channel side edge of the movable valve element is smaller when the movable valve element is at a valve-opening position than when the movable valve element is at a valve-closed position.

According to the present invention thus configured, when the movable valve element is at the valve-closed position in the state in which the operating unit is turned by the turning operation to the front side of the casing in the plane parallel to the sliding surface of the movable valve element, it is possible to maintain the distance between the mixed water passage side edge of the hot water channel of the stationary valve element and the hot water channel side edge of the movable valve element, i.e., the minimum distance therebetween to be large, and therefore it is possible to ensure water shutoff and to prevent water from leaking through the water outlet of the water mixing faucet device. On the other hand, when the movable valve element is at the valve-opening position in the state in which the operating unit is turned by the turning operation to the front side of the casing in the plane parallel to the sliding surface of the movable valve element, it is possible to decrease the distance between the mixed water passage side edge of the hot water channel of the stationary valve element and the hot water channel side edge of the movable valve element as much as possible. Accordingly, the cross-sectional area of the flow channel of the hot water channel of the stationary valve element can be set to be large. Therefore, the area of the portion through which the hot water channel of the stationary valve element and the hot/cold water passage unit of the movable valve element are communicated with each other can be increased, and it is possible to further increase the flow rate of hot water that flows from the hot water channel of the stationary valve element to the hot/cold water passage unit of the movable valve element.

In the present invention, preferably, both of the mixed water passage side edge of the hot water channel of the stationary valve element and the hot water channel side edge of the movable valve element are inclined so as to become closer to the central axis toward a direction in which the movable valve element moves from the valve-closed position to the valve-opening position.

According to the present invention thus configured, as both of the mixed water passage side edge of the hot water channel of the stationary valve element and the hot water channel side edge of the movable valve element are inclined so as to become closer to the central axis of the casing toward a direction in which the movable valve element moves from the valve-closed position to the valve-opening position, when the movable valve element is at the valve-closed position in the state in which the operating unit is turned by the turning operation to the front side of the casing in the plane parallel to the sliding surface of the movable valve element, it is possible to maintain the distance between the mixed water passage side edge of the hot water channel of the stationary valve element and the hot water channel side edge of the movable valve element to be large. Therefore, it is possible to ensure water shutoff and to prevent water from leaking through the water outlet of the water mixing faucet device. On the other hand, when the movable valve element is at the valve-opening position in the state in which the operating unit is turned by the turning operation to the front side of the casing in the plane parallel to the sliding surface of the movable valve element, it is possible to decrease the distance between the mixed water passage side edge of the hot water channel of the stationary valve element and the hot water channel side edge of the movable valve element as much as possible, and the cross-sectional area of the flow channel of the hot water channel of the stationary valve element can be set to be large. Therefore, the area of the portion through which the hot water channel of the stationary valve element and the hot/cold water passage unit of the movable valve element are communicated with each other can be increased, and it is possible to further increase the flow rate of hot water that flows from the hot water channel of the stationary valve element to the hot/cold water passage unit of the movable valve element.

In the present invention, preferably, the mixed water passage side edge of the hot water channel of the stationary valve element includes a first mixed water passage side edge positioned proximally to the central axis, a second mixed water passage side edge positioned distally from the central axis as compared to the first mixed water passage side edge, and a first stepped portion defined by the first mixed water passage side edge and the second mixed water passage side edge, and the hot water channel side edge of the hot/cold water passage unit of the movable valve element includes a first hot water channel side edge positioned proximally to the central axis, a second hot water channel side edge positioned distally from the central axis as compared to the first hot water channel side edge, and a second stepped portion defined by the first hot water channel side edge and the second hot water channel side edge.

According to the present invention thus configured, the mixed water passage side edge of the hot water channel of the stationary valve element includes the first stepped portion defined by the first mixed water passage side edge positioned proximally to the central axis of the casing, and the second mixed water passage side edge positioned distally from the central axis of the casing as compared to the first mixed water passage side edge, and the hot water channel side edge of the hot/cold water passage unit of the movable valve element includes the second stepped portion defined by the first hot water channel side edge positioned proximally to the central axis of the casing, and the second hot water channel side edge positioned distally from the central axis of stationary valve element as compared to the first hot water channel side edge. Accordingly, when the movable valve element is at the valve-closed position in the state in which the operating unit is turned by the turning operation to the front side of the casing in the plane parallel to the sliding surface of the movable valve element, it is possible to maintain the distance between the mixed water passage side edge of the hot water channel of the stationary valve element and the hot water channel side edge of the movable valve element to be large. Therefore, it is possible to ensure water shutoff and to prevent water from leaking through the water outlet of the water mixing faucet device. On the other hand, when the movable valve element is at the valve-opening position in the state in which the operating unit is turned by the turning operation to the front side of the casing in the plane parallel to the sliding surface of the movable valve element, it is possible to decrease the distance between the mixed water passage side edge of the hot water channel of the stationary valve element and the hot water channel side edge of the movable valve element as much as possible, and the cross-sectional area of the flow channel of the hot water channel of the stationary valve element can be set to be large. Therefore, it is possible to increase the area of the portion through which the hot water channel of the stationary valve element and the hot/cold water passage unit of the movable valve element are communicated with each other, and to further increase the flow rate of hot water that flows from the hot water channel of the stationary valve element to the hot/cold water passage unit of the movable valve element.

The water mixing faucet device according to the present invention is user friendly, as being capable of discharging only cold water while securing a sufficient amount of water to be discharged from the water outlet of the water mixing faucet at the frequently-used discharge operation position, as well as of increasing a flow rate of hot water that flows through the hot water channel of the stationary valve element when opening the movable valve element to discharge mixed water.

### BRIEF DESCRIPTION OF THE DRAWINGS

Fig. 1 is a schematic three-quarter perspective view of a water mixing faucet device having a water mixing valve device according to a first embodiment of the present invention built therein;
Fig. 2 is a schematic plan view of the water mixing faucet device having the water mixing valve device according to the first embodiment of the present invention built therein, schematically illustrating a hot-water operation range for discharging only hot water, a cold-water operation range for discharging only cold water, and a mixed water operation range for discharging mixed water;
Fig. 3 is a front cross-sectional view illustrating the water mixing faucet device having the water mixing valve device according to the first embodiment of the present invention built therein;
Fig. 4 is an exploded perspective view illustrating the water mixing valve device according to the first embodiment of the present invention;
Fig. 5 is a plan view illustrating a lower casing member and a stationary valve element of the water mixing valve device according to the first embodiment of the present invention;
Fig. 6 is a plan view illustrating a movable valve element and a movable valve element guiding member of the water mixing valve device according to the first embodiment of the present invention;
Fig. 7 is a side view of the water mixing valve device according to the first embodiment of the present invention, illustrating a state in which an operating lever member is placed at an operating position on a side of the mixed water operation range within the cold-water operation range and the movable valve element is closed;
Fig. 8 is a cross-sectional view taken along line VIII-VIII in Fig. 7;
Fig. 9 is a cross-sectional view taken along line IX-IX in Fig. 7;
Fig. 10 is a cross-sectional view taken along line X-X in Fig. 7;
Fig. 11 is a side view of the water mixing valve device according to the first embodiment of the present invention, illustrating a state in which the operating lever member is placed at the operating position on the side of the mixed water operation range within the cold-water operation range and the movable valve element is opened;
Fig. 12 is a cross-sectional view taken along line XII-XII in Fig. 11;
Fig. 13 is a cross-sectional view taken along line XIII-XIII in Fig. 11;
Fig. 14 is a cross-sectional view taken along line XIV-XIV in Fig. 11;
Fig. 15 is a side view of the water mixing valve device according to the first embodiment of the present invention, illustrating a state in which the operating lever member is placed at a cold-water-side-most operating position within the cold-water operation range and the movable valve element is closed;
Fig. 16 is a cross-sectional view taken along line XVI-XVI in Fig. 15;
Fig. 17 is a cross-sectional view taken along line XVII-XVII in Fig. 15;
Fig. 18 is a cross-sectional view taken along line XVIII-XVIII in Fig. 15;
Fig. 19 is a side view of the water mixing valve device according to the first embodiment of the present invention, illustrating a state in which the operating lever member is placed at the cold-water-side-most operating position within the cold-water operation range and the movable valve element is opened;
Fig. 20 is a cross-sectional view taken along line XVIII-XVIII in Fig. 19;
Fig. 21 is a cross-sectional view taken along line XXI-XXI in Fig. 19;
Fig. 22 is a cross-sectional view taken along line XXII-XXII in Fig. 19;
Fig. 23 is a side view of the water mixing valve device according to the first embodiment of the present invention, illustrating a state in which the operating lever member is placed at a hot-water-side-most operating position within the hot-water operation range and the movable valve element is closed;
Fig. 24 is a cross-sectional view taken along line XXIV-XXIV in Fig. 23;
Fig. 25 is a cross-sectional view taken along line XXV-XXV in Fig. 23;
Fig. 26 is a cross-sectional view taken along line XXVI-XXVI in Fig. 23;
Fig. 27 is a side view of the water mixing valve device according to the first embodiment of the present invention, illustrating a state in which the operating lever member is placed at the hot-water-side-most operating position within the hot-water operation range and the movable valve element is opened;
Fig. 28 is a cross-sectional view taken along line XXVIII-XXVIII in Fig. 27;
Fig. 29 is a cross-sectional view taken along line XXIX-XXIX in Fig. 27;
Fig. 30 is a cross-sectional view taken along line XXX-XXX in Fig. 27;
Fig. 31 is a view of a first region and a second region of the stationary valve element in the plan view of Fig. 5 illustrating the lower casing member and the stationary valve element of the water mixing valve device according to the first embodiment of the present invention;
Fig. 32 is a view of the stationary valve element and the movable valve element of the water mixing valve device according to the first embodiment of the present invention, illustrating a first region to a fourth region of the stationary valve element in a state in which the operating lever member is placed at an operating position within any of the cold-water operation range, the hot-water operation range, and the mixed water operation range and the movable valve element is closed;
Fig. 33 is a view of the stationary valve element and the movable valve element of the water mixing valve device according to the first embodiment of the present invention, illustrating the first region to the fourth region of the stationary valve element in the state in which the operating lever member is placed at the operating position on the side of the mixed water operation range within the cold-water operation range and the movable valve element is opened;
Fig. 34 is a view of the stationary valve element and the movable valve element of the water mixing valve device according to the first embodiment of the present invention, illustrating the first region to the fourth region of the stationary valve element in the state in which the operating lever member is placed at the hot-water-side-most operating position within the hot-water operation range and the movable valve element is opened;
Fig. 35 is a plan view illustrating a lower casing member and a movable valve element guiding member of a water mixing valve device according to a second embodiment of the present invention in a state in which an operating lever member is placed at an operating position on a side of a mixed water operation range within a cold-water operation range and a movable valve element is closed;
Fig. 36 is a plan view illustrating a stationary valve element and the movable valve element of the water mixing valve device according to the second embodiment of the present invention in the state in which the operating lever member is placed at the operating position on the side of the mixed water operation range within the cold-water operation range and the movable valve element is closed;
Fig. 37 is a plan view illustrating the stationary valve element and the movable valve element of the water mixing valve device according to the second embodiment of the present invention in the state in which the operating lever member is placed at the operating position on the side of the mixed water operation range within the cold-water operation range and the movable valve element is opened;
Fig. 38 is a plan view illustrating the stationary valve element and the movable valve element of the water mixing valve device according to the second embodiment of the present invention in a state in which the operating lever member is placed at the hot-water-side-most operating position within the hot-water operation range and the movable valve element is opened; and
Fig. 39 is a plan view illustrating the stationary valve element and the movable valve element of the water mixing valve device according to the second embodiment of the present invention in a state in which the operating lever member is placed at the cold-water-side-most operating position within the cold-water operation range and the movable valve element is opened.

### DETAILED DESCRIPTION OF PREFERRED EMBODIMENTS

Hereinafter, preferred embodiments of the present invention will be described with reference to the drawings.

### First Embodiment

Hereinafter, a water mixing faucet device according to a first embodiment of the present invention will be described with reference to the drawings.

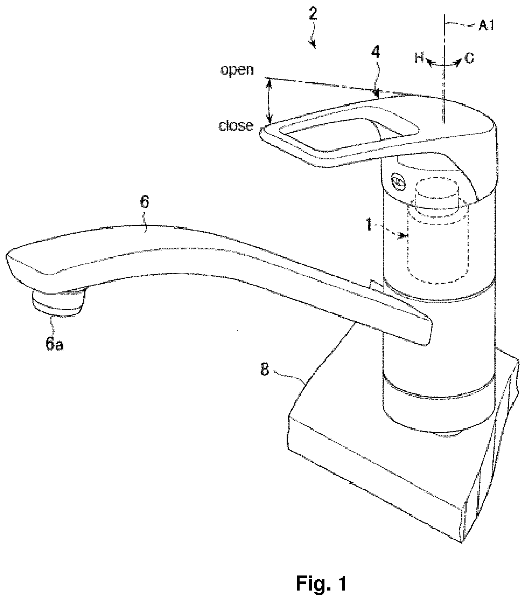

First, Fig. 1 is a schematic three-quarter perspective view of a water mixing faucet device having a water mixing valve device according to the first embodiment of the present invention built therein.

As illustrated in Fig. 1, a water mixing faucet device 2 having a water mixing valve device 1 according to the first embodiment of the present invention built therein is a so-called single-lever water mixing faucet device capable of mixing hot water supplied from a hot-water supply source (not depicted) and cold water supplied from a cold-water supply source (not depicted), controlling and adjusting a flow rate and a temperature of the mixed water by operating a single handle lever 4, and discharging or stopping discharging the mixed water from a water outlet 6a of a spout 6.

Specifically, the water mixing faucet device 2 is placed on a countertop 8 of a sink in the kitchen or of a washbasin, and when the handle lever 4 is turned upward (a direction indicated by an arrow "open" in Fig. 1) by a turning operation, the water mixing faucet device 2 is set to a water discharge state in which mixed water can be discharged from the water outlet 6a of the spout 6 such that the more upward the handle lever 4 is turned, the more the flow rate of mixed water discharged from the water outlet 6a of the spout 6 is increased.

On the other hand, when the handle lever 4 is turned by the turning operation to a downmost position (a direction indicated by an arrow "closed" in Fig. 1), the water mixing faucet device 2 is set to a water shutoff state in which discharging of mixed water from the water outlet 6a of the spout 6 is stopped.

Further, when the handle lever 4 is turned by the turning operation horizontally to a direction indicated by an arrow "C" in Fig. 1 centering the central axis A1 of the water mixing faucet device 2 in a vertical direction (rightward horizontal direction illustrated in Fig. 1), it is possible to set the temperature of the mixed water to be discharged from the water outlet 6a of the spout 6 to a low temperature side.

On the other hand, when the handle lever 4 is turned by the turning operation horizontally to a direction indicated by an arrow "H" in Fig. 1 centering the central axis A1 (leftward horizontal direction illustrated in Fig. 1), it is possible to set the temperature of the mixed water to be discharged from the water outlet 6a of the spout 6 to a high temperature side.

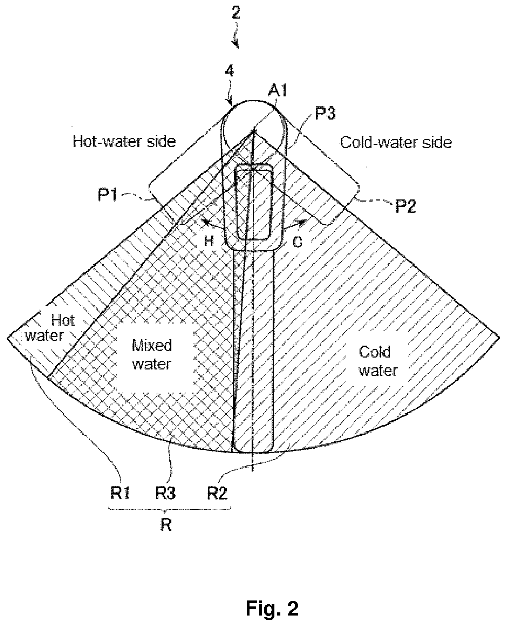

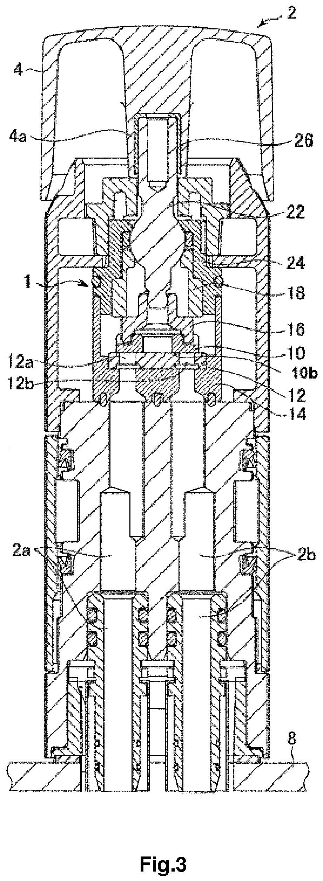

Next, Fig. 2 is a schematic plan view of the water mixing faucet device having the water mixing valve device according to the first embodiment of the present invention built therein, schematically illustrating a hot-water operation range for discharging only hot water, a cold-water operation range for discharging only cold water, and a mixed water operation range for discharging mixed water, and Fig. 3 is a front cross-sectional view illustrating the water mixing faucet device having the water mixing valve device according to the first embodiment of the present invention built therein.

As illustrated in Fig. 2, an operation range R in which the handle lever 4 is turned by the turning operation in the horizontal direction includes a hot-water operation range R1, a cold-water operation range R2, and a mixed water operation range R3.

In the hot-water operation range R1, when the handle lever 4 is turned by the turning operation to a hot-water side (the direction indicated by the arrow H illustrated in Fig. 1 and Fig. 2) to be positioned at an operating position P1, a movable valve element 10 which will be described in detail later of the water mixing valve device 1 opens only a hot water channel 12a of a stationary valve element 12 which will be described in detail later of the water mixing valve device 1, allows only hot water to flow into a hot/cold water passage unit 10a of the movable valve element 10 from the hot water channel 12a of the stationary valve element 12, and causes only hot water to be discharged from the water outlet 6a of the water mixing faucet device 2.

Further, in the cold-water operation range R2, when the handle lever 4 is turned by the turning operation to a cold-water side (the direction indicated by the arrow C illustrated in Fig. 1 and Fig. 2) to be placed at an operating position P2, the movable valve element 10 opens only a cold water channel 12b of the stationary valve element 12, allows only cold water to flow into the hot/cold water passage unit 10a of the movable valve element 10 from the cold water channel 12b of the stationary valve element 12, and causes only cold water to be discharged from the water outlet 6a of the water mixing faucet device 2.

Moreover, the mixed water operation range R3 is a region, when the handle lever 4 is turned by the turning operation to the hot-water side from a substantially-central operating position P3 in front of the water mixing faucet device 2 toward the hot-water operation range R1 (the direction indicated by the arrow H illustrated in Fig. 1 and Fig. 2), positioned between the hot-water operation range R1 and the cold-water operation range R2, and at which the movable valve element 10 opens the hot water channel 12a and the cold water channel 12b of the stationary valve element 12, and hot water and cold water that flow into the hot/cold water passage unit 10a of the movable valve element 10 respectively from the hot water channel 12a and the cold water channel 12b of the stationary valve element 12 are mixed and discharged through the water outlet 6a of the water mixing faucet device 2.

It should be noted that in this embodiment, a region within the cold-water operation range R2 on a side of the mixed water operation range R3 corresponds to a frontal region in which the water mixing faucet device 2 is frequently used, and thus only water is discharged from the water outlet 6a of the water mixing faucet device 2 when the handle lever 4 is positioned at the operating position P3, which is substantially central position on a frontal side.

Next, with reference to Fig. 3 through Fig. 30, details of the water mixing valve device according to the first embodiment of the present invention will be described.

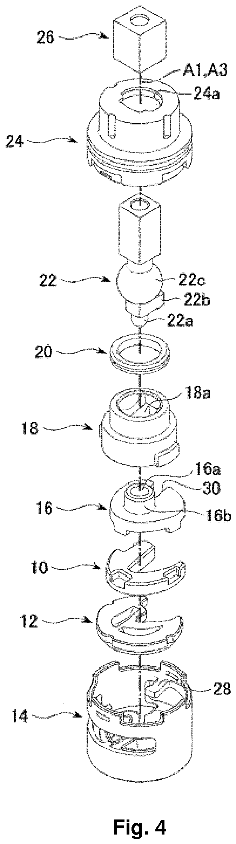

First, Fig. 4 is an exploded perspective view illustrating the water mixing valve device according to the first embodiment of the present invention.

As illustrated in Fig. 4, the water mixing valve device 1 according to this embodiment is provided with, from bottom up, a lower casing member 14, the stationary valve element 12, the movable valve element 10, a movable valve element guiding member 16, an operating lever holding member 18, a sealing member 20, an operating lever member 22, a upper casing member 24, and an operating lever upper connecting member 26.

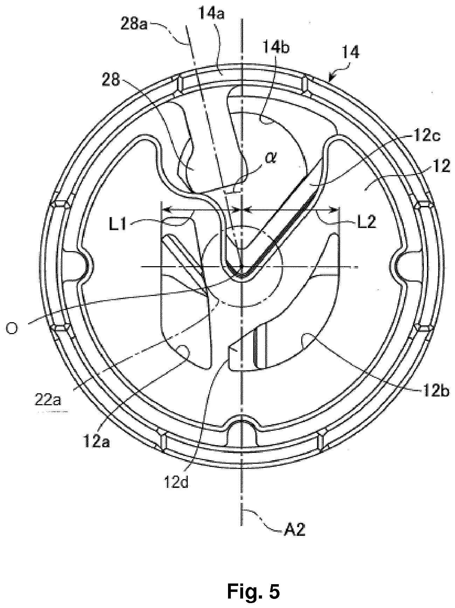

Then, Fig. 5 is a plan view illustrating a lower casing member and a stationary valve element of the water mixing valve device according to the first embodiment of the present invention.

As illustrated in Fig. 3 through Fig. 5, the lower casing member 14 is connected to upper ends (downstream-side ends) of a hot water channel 2a and a cold water channel 2b that extend upward and downward through the water mixing faucet device 2, and the stationary valve element 12 is fixed within the lower casing member 14.

Further, the stationary valve element 12 is provided with, on its rear side, a water mixing channel 12c through which hot water and/or cold water that have passed through the hot/cold water passage unit 10a of the movable valve element 10 passes.

Moreover, the lower casing member 14 is provided with, at a portion under the water mixing channel 12c of the stationary valve element 12 and adjacent to a rear end 14a of the lower casing member 14 within the lower casing member 14, a water mixing channel 14b that communicates with the water mixing channel 12c of the stationary valve element 12.

Furthermore, as illustrated in Fig. 5, the hot water channel 12a and the cold water channel 12b provided through the stationary valve element 12 are respectively connected with the hot water channel 2a and the cold water channel 2b within the water mixing faucet device 2.

In addition, as illustrated in Fig. 5, the hot water channel 12a and the cold water channel 12b of the stationary valve element 12 are provided in shapes different from each other and asymmetrically with respect to a central axis A2 of the stationary valve element 12 such that a maximum distance L1 is smaller than a maximum distance L2; the maximum distance L1 is a length of a perpendicular line from an outermost position of the hot water channel 12a of the stationary valve element 12 (a leftmost position of the hot water channel 12a in Fig. 5) to the central axis A2 of the casing extending in a front-back direction of the stationary valve element 12, and the maximum distance L2 is a length of a perpendicular line from an outermost position of the cold water channel 12b of the stationary valve element 12 (a rightmost position of the cold water channel 12b in Fig. 5) to the central axis A2 of the stationary valve element 12.

Further, as illustrated in Fig. 5, at a portion adjacent to the rear end 14a of the lower casing member 14 on an inner circumference side and above the stationary valve element 12, a guiding projection 28 as guiding means for guiding sliding and turning of the movable valve element 10 with respect to the stationary valve element 12 is provided so as to project inwardly. A central axis 28a of the guiding projection 28 is set obliquely at a predetermined angle α in a horizontal plane with respect to the central axis A2 extending along the front-back direction of the stationary valve element 12.

Moreover, the central axis A2 passes a center O of the lower casing member 14 and a portion near a hot-water side end 12d of the cold water channel 12b of the stationary valve element 12. In addition, above the center O of the lower casing member 14, a central point of a connecting section 22a of the operating lever member 22 in a water shutoff state is positioned. The connecting section 22a is attached to an attachment hole 16a of the movable valve element guiding member 16 that will be later described in detail. Specifically, the central axis A2 passes a point at which a central point of the connecting section 22a of the operating lever member 22 is projected as the center O and the portion near the hot-water side end 12d of the cold water channel 12b of the stationary valve element 12.

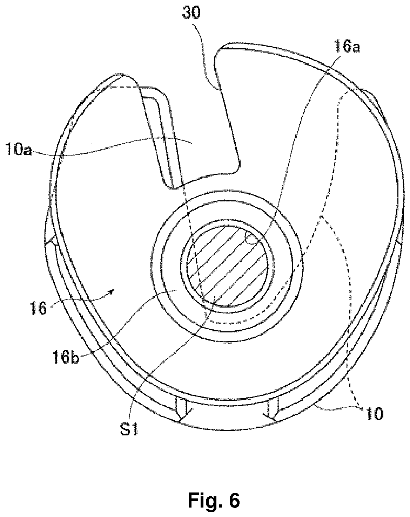

Next, Fig. 6 is a plan view illustrating the movable valve element and the movable valve element guiding member of the water mixing valve device according to the first embodiment of the present invention.

As illustrated in Fig. 3, Fig. 4, and Fig. 6, the movable valve element 10 is provided slidably and turnably on the stationary valve element 12.

Further, the movable valve element guiding member 16 configured to guide the sliding and turning of the movable valve element 10 with respect to the stationary valve element 12 is fixed on the movable valve element 10. The movable valve element guiding member 16 is provided with a guiding groove 30 as guiding means, in which the guiding projection 28 of the lower casing member 14 can be inserted and fitted in a state in which the movable valve element guiding member 16 is attached within the lower casing member 14 along with the movable valve element 10.

While in this embodiment, the movable valve element 10 and the movable valve element guiding member 16 are provided for example as separate members, the movable valve element 10 and the movable valve element guiding member 16 can be provided integrally to form a single member.

Moreover, as illustrated in Fig. 3, Fig. 4, and Fig. 6, the movable valve element guiding member 16 is provided with, at its substantial center, a cylindrical projecting portion 16b projecting upward and defining the attachment hole 16a in and to which the substantially-hemispherical connecting section 22a provided for a lower end of the operating lever member 22 is inserted and attached.

In a state in which a longitudinal central axis A3 of the operating lever member 22 matches the central axis A1 of the water mixing faucet device 2 extending in the vertical direction and the operating lever member 22 is upright, the movable valve element 10 is in a closed state, and both of the hot water channel 12a and the cold water channel 12b of the stationary valve element 12 are closed.

Here, as illustrated in Fig. 3, a lower surface of the movable valve element 10 constitutes a sliding surface 10b with which the movable valve element 10 slides along an upper surface of the stationary valve element 12, and it is possible to open and close the movable valve element 10 by turning the operating lever member 22 in a plane perpendicular to the sliding surface 10b.

Further, a plane section S1 (see Fig. 6) of the attachment hole 16a of the movable valve element guiding member 16 is provided substantially in a circular cross-sectional shape that corresponds to the substantially hemispherical shape of the connecting section 22a of the operating lever member 22, so that turning the operating lever member 22 about the central axis A3 when the movable valve element 10 is in the closed state causes the connecting section 22a of the operating lever member 22 to turn idly with respect to the attachment hole 16a of the movable valve element guiding member 16.

On the other hand, in a state in which the longitudinal central axis A3 of the operating lever member 22 is inclined, to a predetermined direction, with respect to the central axis A1 of the water mixing faucet device 2 extending upward and downward, the substantially hemispherical connecting section 22a of the operating lever member 22 presses the attachment hole 16a of the movable valve element guiding member 16 to a predetermined horizontal direction to cause the movable valve element 10 to be turned and moved, along with the movable valve element guiding member 16, with respect to the stationary valve element 12. Thus, the movable valve element 10 is caused to be in an opened state, and at least one of the hot water channel 12a and the cold water channel 12b of the stationary valve element 12 is opened.

Moreover, as illustrated in Fig. 4, the operating lever holding member 18 is interposed between the operating lever member 22 and the movable valve element guiding member 16.

The operating lever holding member 18 is provided with, at its central portion, an elongate fitting hole 18a in which a rectangular fitting section 22b provided above the connecting section 22a of the operating lever member 22 can be inserted and fitted. The fitting section 22b of the operating lever member 22 is movable along the elongate fitting hole 18a during an open/close operation of the movable valve element 10 by the operating lever member 22.

Furthermore, when the operating lever member 22 is turned within a predetermined range of turning angle about the longitudinal central axis A3, the operating lever holding member 18 is turnable together with the operating lever member 22 within the predetermined range of turning angle.

The sealing member 20 illustrated in Fig. 4 is provided between a ball section 22c of the operating lever member 22 provided in a ball shape above the fitting section 22b of the operating lever member 22 and an attachment hole 24a provided in substantial center of the upper casing member 24, and configured to liquid-tightly seal an interior and an exterior of the upper casing member 24.

Further, to the operating lever upper connecting member 26 illustrated in Fig. 3 and Fig. 4, a connecting section 4a of the handle lever 4 can be attached on top of it in a state in which the operating lever upper connecting member 26 is attached over the operating lever member 22.

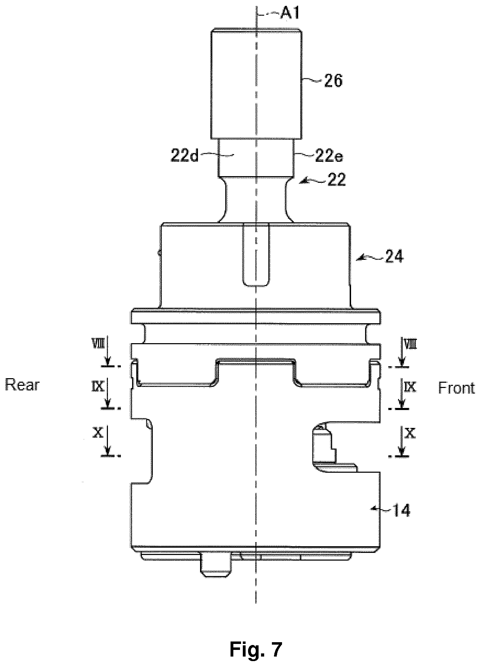

Next, Fig. 7 is a side view of the water mixing valve device according to the first embodiment of the present invention, illustrating a state in which the operating lever member is placed at an operating position on a side of the mixed water operation range within the cold-water operation range and the movable valve element is closed.

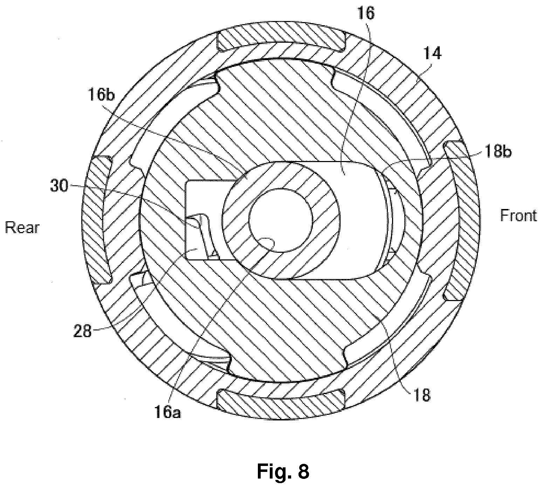

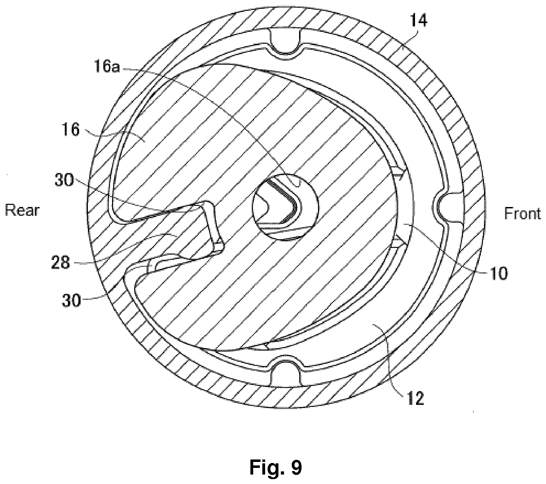

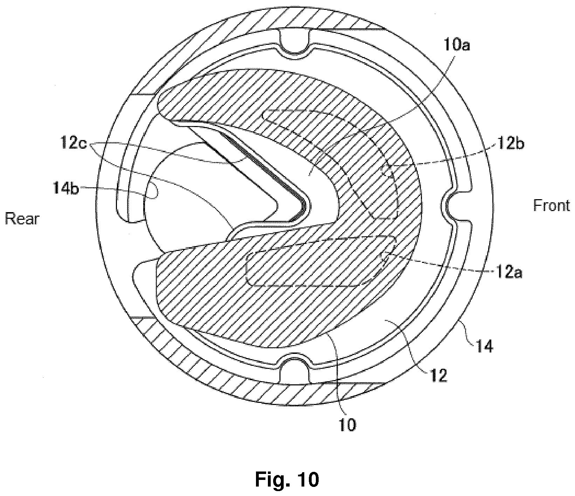

Further, Fig. 8 is a cross-sectional view taken along line VIII-VIII in Fig. 7, Fig. 9 is a cross-sectional view taken along line IX-IX in Fig. 7, and Fig. 10 is a cross-sectional view taken along line X-X in Fig. 7.

As illustrated in Fig. 1, Fig. 2, and Fig. 7, in the state in which the operating lever member 22 is placed at the operating position P3 within the cold-water operation range R2 on the side of the mixed water operation range R3 and the movable valve element 10 is closed, the longitudinal central axis A3 of the operating lever member 22 matches the central axis A1 of the water mixing faucet device 2 extending in the vertical direction and the operating lever member 22 is upright.

Moreover, as illustrated in Fig. 8, the operating lever holding member 18 is provided with, below the elongate fitting hole 18a, an elongate guiding hole 18b whose cross-sectional shape is oval extending backward from a central portion of a lower section of the operating lever holding member 18. The elongate guiding hole 18b of the operating lever holding member 18 is configured to guide the cylindrical projecting portion 16b of the movable valve element guiding member 16.

Furthermore, in the state in which the operating lever member 22 is placed at the operating position P3 within the cold-water operation range R2 on the side of the mixed water operation range R3 and the movable valve element 10 is closed, a part of a rear region of an outer circumference of the cylindrical projecting portion 16b of the movable valve element guiding member 16 is in contact with a rear region of an inner circumference of the guiding hole 18b of the operating lever holding member 18.

Further, as illustrated in Fig. 1, Fig. 2, Fig. 9, and Fig. 10, in the state in which the operating lever member 22 is placed at the operating position P3 within the cold-water operation range R2 on the side of the mixed water operation range R3 and the movable valve element 10 is closed, the movable valve element guiding member 16 and the movable valve element 10 thereunder are positioned at a portion on a backmost side within the lower casing member 14, and the movable valve element 10 closes both of the hot water channel 12a and the cold water channel 12b of the stationary valve element 12. At this time, as illustrated in Fig. 9, the guiding projection 28 of the lower casing member 14 is inserted into and fitted in substantially throughout the guiding groove 30 of the movable valve element guiding member 16.

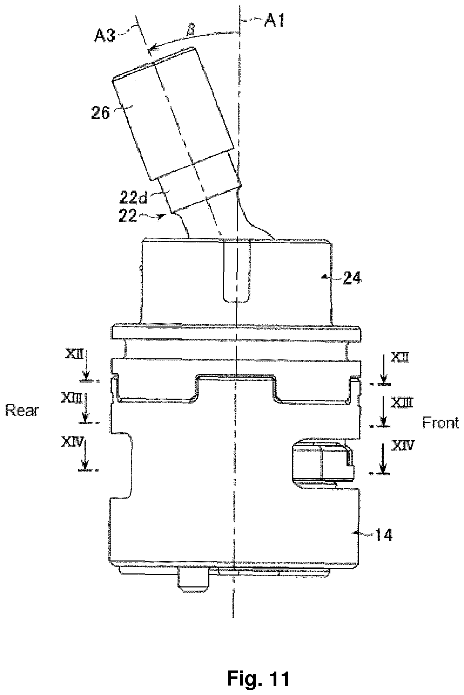

Next, Fig. 11 is a side view of the water mixing valve device according to the first embodiment of the present invention, illustrating the state in which the operating lever member is placed at an operating position on the side of the mixed water operation range within the cold-water operation range and the movable valve element is opened.

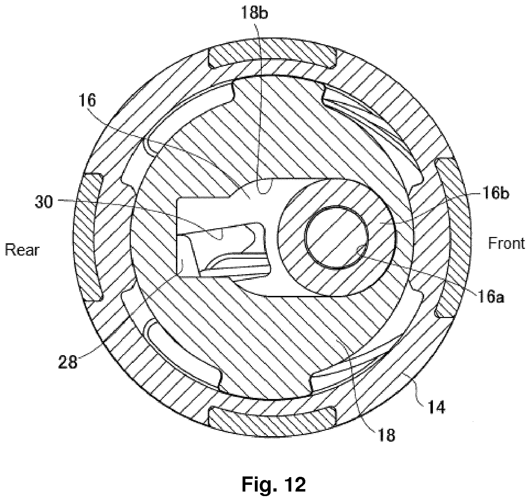

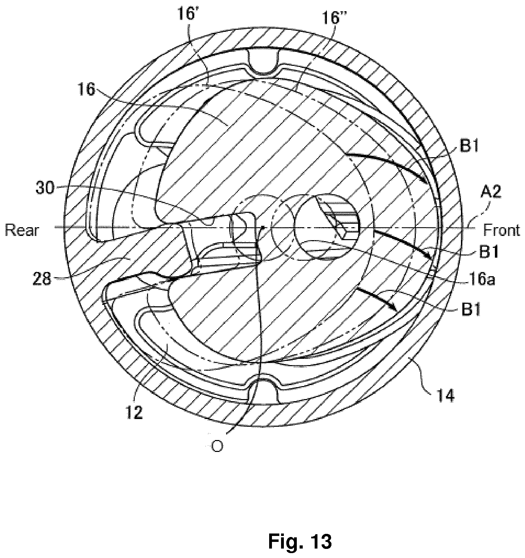

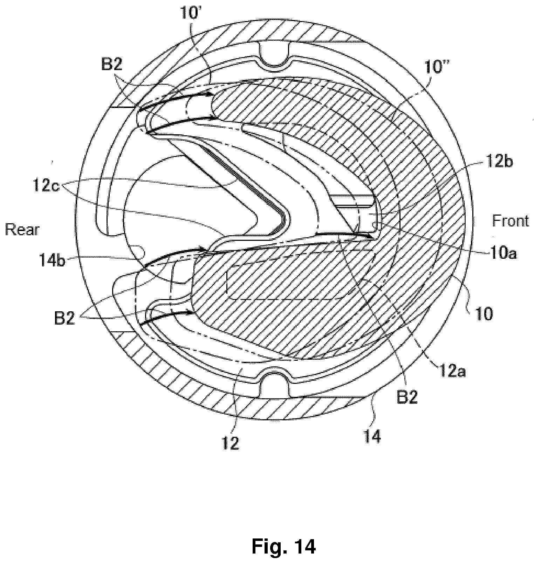

Further, Fig. 12 is a cross-sectional view taken along line XII-XII in Fig. 11, Fig. 13 is a cross-sectional view taken along line XIII-XIII in Fig. 11, and Fig. 14 is a cross-sectional view taken along line XIV-XIV in Fig. 11.

As illustrated in Fig. 1, Fig. 2, and Fig. 11, in the state in which the operating lever member 22 is placed at the operating position P3 within the cold-water operation range R2 on the side of the mixed water operation range R3 and the movable valve element 10 is opened, the longitudinal central axis A3 of the operating lever member 22 is inclined backward by a predetermined angle β with respect to the central axis A1 of the water mixing faucet device 2 extending in the vertical direction.

Further, as illustrated in Fig. 1, Fig. 2, and Fig. 12, in the state in which the operating lever member 22 is placed at the operating position P3 within the cold-water operation range R2 on the side of the mixed water operation range R3 and the movable valve element 10 is opened, the cylindrical projecting portion 16b of the movable valve element guiding member 16 is pressed forward by the connecting section 22a of the operating lever member 22, and a frontal region of the outer circumference of the cylindrical projecting portion 16b of the movable valve element guiding member 16 is in contact with a frontal region of the inner circumference of the guiding hole 18b of the operating lever holding member 18.

At this time, as illustrated in Fig. 13 and Fig. 14, the movable valve element guiding member 16 and the movable valve element 10 thereunder are positioned generally on a frontmost side within the lower casing member 14, the movable valve element 10 keeps the hot water channel 12a of the stationary valve element 12 closed and partially opens only the cold water channel 12b of the stationary valve element 12. In addition, mixed water that have passed through the hot/cold water passage unit 10a of the movable valve element 10 from the partially opened cold water channel 12b of the stationary valve element 12 flows to the water mixing channel 14b of the lower casing member 14 through the water mixing channel 12c of the stationary valve element 12.

Moreover, in Fig. 13, an outline of the movable valve element guiding member 16 attached to the movable valve element 10 in the closed state illustrated in Fig. 9 is represented by a dashed line 16', and an outline of the movable valve element guiding member 16 attached to the movable valve element 10 in transition from the closed state to the opened state is represented by a dashed line 16". As illustrated in Fig. 13, during the transition from the movable valve element guiding member 16' of the movable valve element 10 in the closed state to the movable valve element guiding member 16 of the movable valve element 10 in the opened state, a part of the guiding groove 30 of the movable valve element guiding member 16 generally moves forward while in contact with the guiding projection 28 of the lower casing member 14, and while turning toward a direction indicated by an arrow B1 in Fig. 13 in a horizontal plane, moves to a direction toward which an opening cross-sectional area of the cold water channel 12b of the stationary valve element 12 is increased, and toward the hot-water side (the side of the hot water channel 12a of the stationary valve element 12) in relative with the movable valve element guiding member 16 viewed from above with respect to the central axis A2 extending in the front-back direction of the stationary valve element 12.

Furthermore, in Fig. 14, an outline of the movable valve element 10 in the closed state illustrated in Fig. 10 is represented by a dashed line 10', and an outline of the movable valve element 10 in transition from the closed state to the opened state is represented by a dashed line 10". As illustrated in Fig. 14, during the transition from the movable valve element 10' in the closed state to the movable valve element 10 in the opened state, the hot/cold water passage unit 10a of the movable valve element 10 generally slides forward with respect to the stationary valve element 12 while the movable valve element 10 keeps the hot water channel 12a of the stationary valve element 12 closed, and moves relatively toward the hot-water side (the side of the hot water channel 12a of the stationary valve element 12) while turning toward a direction indicated by an arrow B2 in Fig. 14 in a horizontal plane.

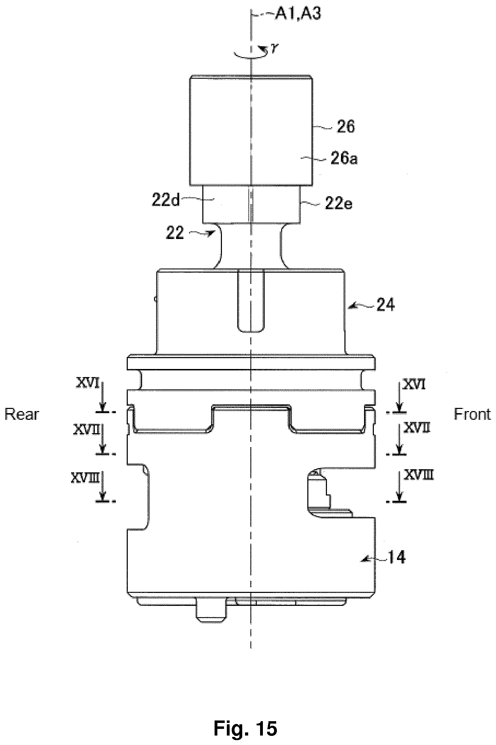

Next, Fig. 15 is a side view of the water mixing valve device according to the first embodiment of the present invention, illustrating a state in which the operating lever member is placed at a cold-water-side-most operating position within the cold-water operation range and the movable valve element is closed.

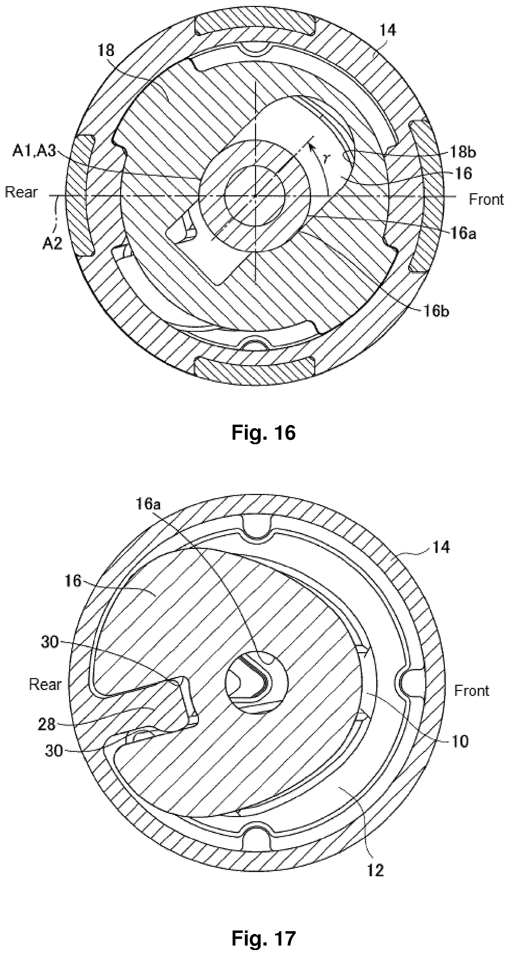

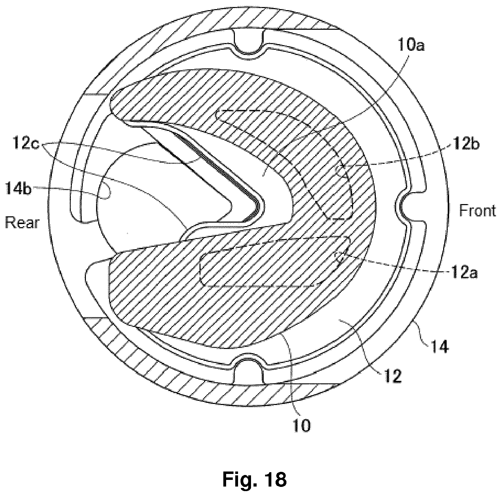

Further, Fig. 16 is a cross-sectional view taken along line XVI-XVI in Fig. 15, Fig. 17 is a cross-sectional view taken along line XVII-XVII in Fig. 15, and Fig. 18 is a cross-sectional view taken along line XVIII-XVIII in Fig. 15.

As illustrated in Fig. 1, Fig. 2, and Fig. 15, in the state in which the operating lever member 22 is placed at the cold-water-side-most operating position P2 within the cold-water operation range R2 and the movable valve element 10 is closed, the longitudinal central axis A3 of the operating lever member 22 matches the central axis A1 of the water mixing faucet device 2 extending in the vertical direction and the operating lever member 22 is upright.

Moreover, in Fig. 15, a front surface 26a of the operating lever upper connecting member 26 and a front surface 22e of an attachment section 22d of the operating lever member 22 to which the operating lever upper connecting member 26 is attached that are illustrated in Fig. 7 are turned in a counterclockwise direction by a predetermined angle γ centering the central axis A3 viewed from above.

Furthermore, as illustrated in Fig. 16, the operating lever holding member 18 is configured to turn, together with the operating lever member 22, by the predetermined angle γ centering the central axis A3, and a long side of the elongate guiding hole 18b of the operating lever holding member 18 illustrated in Fig. 16 is inclined by the predetermined angle γ with respect to the central axis A2 extending in the front-back direction of the lower casing member 14.

Further, in the state in which the movable valve element 10 is closed, the connecting section 22a of the operating lever member 22 is caused to turn idly with respect to the attachment hole 16a of the movable valve element guiding member 16 even if the operating lever member 22 is turned about the central axis A3, and therefore the movable valve element 10 and the movable valve element guiding member 16 may not be turned about the central axis A3. In addition, a part of a diagonally backward left region in an outer circumferential surface of the cylindrical projecting portion 16b of the movable valve element guiding member 16 in Fig. 16 is in contact with a diagonally backward left region in an inner circumferential surface of the guiding hole 18b of the operating lever holding member 18 in Fig. 16.

Specifically, as illustrated in Fig. 1, Fig. 2, Fig. 17, and Fig. 18, in the state in which the operating lever member 22 is placed at the cold-water-side-most operating position P2 within the cold-water operation range R2 and the movable valve element 10 is closed, similarly to the state illustrated in Fig. 9 and Fig. 10 in which the operating lever member 22 is placed at the operating position P3 within the cold-water operation range R2 on the side of the mixed water operation range R3 and the movable valve element 10 is closed, the movable valve element guiding member 16 and the movable valve element 10 thereunder are positioned at the portion on the backmost side within the lower casing member 14, and the movable valve element 10 closes both of the hot water channel 12a and the cold water channel 12b of the stationary valve element 12.

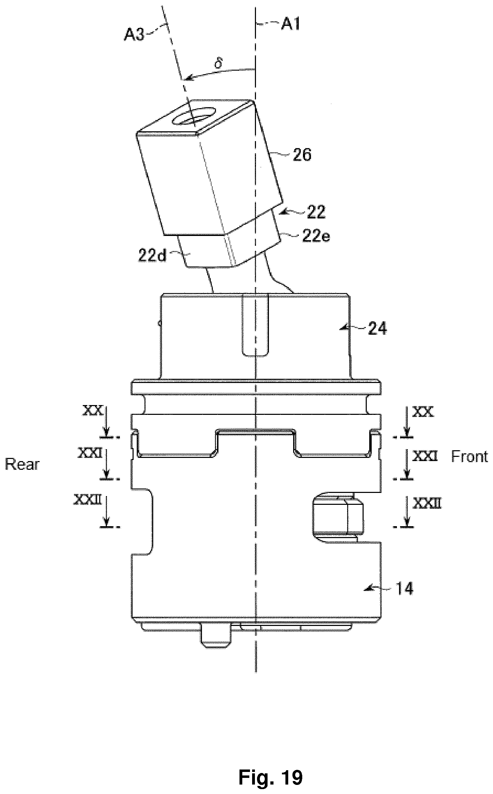

Next, Fig. 19 is a side view of the water mixing valve device according to the first embodiment of the present invention, illustrating a state in which the operating lever member is placed at the cold-water-side-most operating position within the cold-water operation range and the movable valve element is opened.

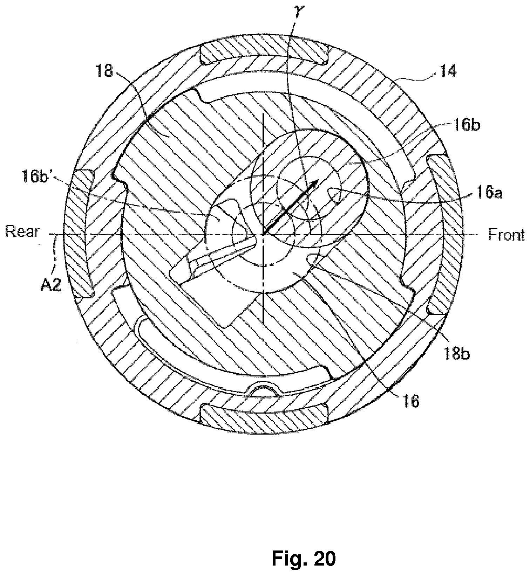

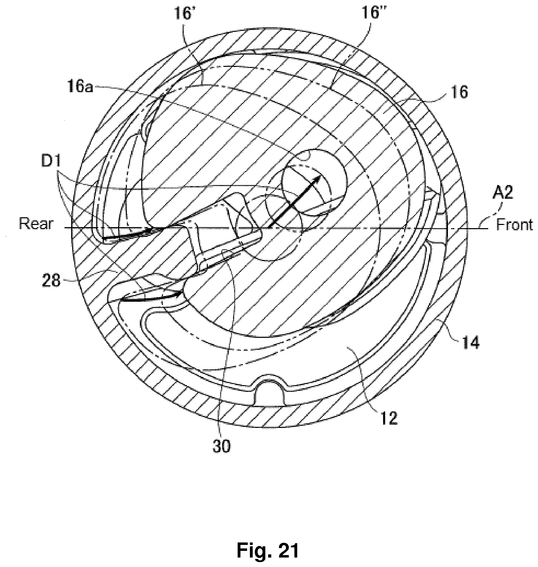

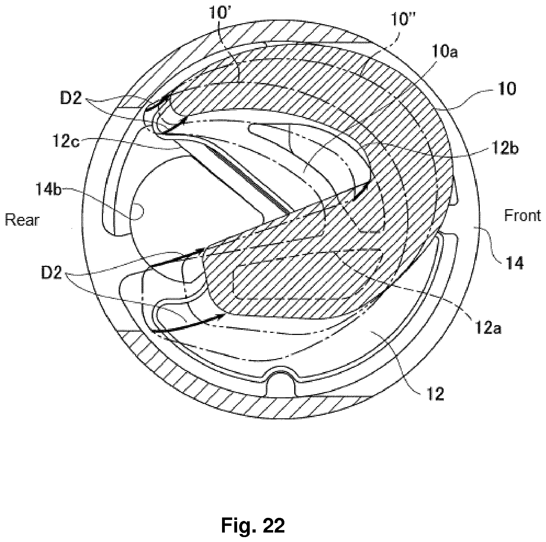

Further, Fig. 20 is a cross-sectional view taken along line XVIII-XVIII in Fig. 19, Fig. 21 is a cross-sectional view taken along line XXI-XXI in Fig. 19, and Fig. 22 is a cross-sectional view taken along line XXII-XXII in Fig. 19.

As illustrated in Fig. 1, Fig. 2, and Fig. 19, in the state in which the operating lever member 22 is placed at the cold-water-side-most operating position P2 within the cold-water operation range R2 and the movable valve element 10 is opened, the longitudinal central axis A3 of the operating lever member 22 is inclined diagonally backward by a predetermined angle δ with respect to the central axis A1 of the water mixing faucet device 2 extending in the vertical direction.

Moreover, as illustrated in Fig. 1, Fig. 2, and Fig. 20, in the state in which the operating lever member 22 is placed at the cold-water-side-most operating position P2 within the cold-water operation range R2 and the movable valve element 10 is opened, the cylindrical projecting portion 16b of the movable valve element guiding member 16 is pressed diagonally forward right by the connecting section 22a of the operating lever member 22 viewed from a front side of Fig. 20, and moved from the central axis A2 extending in the front-back direction of the lower casing member 14 toward a direction at the predetermined angle γ by the elongate guiding hole 18b of the operating lever holding member 18, such that a diagonally forward right region of the outer circumferential surface of the cylindrical projecting portion 16b of the movable valve element guiding member 16 viewed from the front side of Fig. 20 is in contact with a diagonally forward right region of the inner circumferential surface of the guiding hole 18b of the operating lever holding member 18.

Here, in Fig. 20, an outline of the projecting portion 16b of the movable valve element guiding member 16 in the state in which the operating lever member 22 illustrated in Fig. 17 is placed at the cold-water-side-most operating position P2 within the cold-water operation range R2 and the movable valve element 10 is opened is represented by a dashed line 16b'.

Next, as illustrated in Fig. 21 and Fig. 22, the movable valve element guiding member 16 and the movable valve element 10 thereunder are positioned generally on a diagonally forward right side within the lower casing member 14 in Fig. 21 and Fig. 22, and the movable valve element 10 keeps the hot water channel 12a of the stationary valve element 12 closed and partially opens only the cold water channel 12b of the stationary valve element 12. Further, cold water that have passed through the hot/cold water passage unit 10a of the movable valve element 10 from the partially opened cold water channel 12b of the stationary valve element 12 flows to the water mixing channel 14b of the lower casing member 14 through the water mixing channel 12c of the stationary valve element 12.

Moreover, in Fig. 21, the outline of the movable valve element guiding member 16 attached to the movable valve element 10 in the closed state illustrated in Fig. 17 is represented by the dashed line 16', and the outline of the movable valve element guiding member 16 attached to the movable valve element 10 in transition from the closed state to the opened state is represented by the dashed line 16". As illustrated in Fig. 21, during the transition from the movable valve element guiding member 16' of the movable valve element 10 in the closed state to the movable valve element guiding member 16 of the movable valve element 10 in the opened state, a part of the guiding groove 30 of the movable valve element guiding member 16 generally moves diagonally forward right viewed from a front side of Fig. 21 while in contact with the guiding projection 28 of the lower casing member 14, and while turning toward a direction indicated by an arrow D1 in Fig. 21 in a horizontal plane, moves toward the cold-water side (the side of the cold water channel 12b of the stationary valve element 12) in relative with the movable valve element guiding member 16 viewed from above with respect to the central axis A2 extending in the front-back direction of the stationary valve element 12.

Furthermore, in Fig. 22, the outline of the movable valve element 10 in the closed state illustrated in Fig. 18 is represented by the dashed line 10', and the outline of the movable valve element 10 in transition from the closed state to the opened state is represented by the dashed line 10". As illustrated in Fig. 22, during the transition from the movable valve element 10' in the closed state to the movable valve element 10 in the opened state, the hot/cold water passage unit 10a of the movable valve element 10 generally slides diagonally forward right viewed from a front side of Fig. 22 with respect to the stationary valve element 12 while the movable valve element 10 keeps the hot water channel 12a of the stationary valve element 12 closed, and moves relatively toward the cold-water side (the side of the cold water channel 12b of the stationary valve element 12) while turning toward a direction indicated by an arrow D2 in Fig. 22 in the horizontal plane.

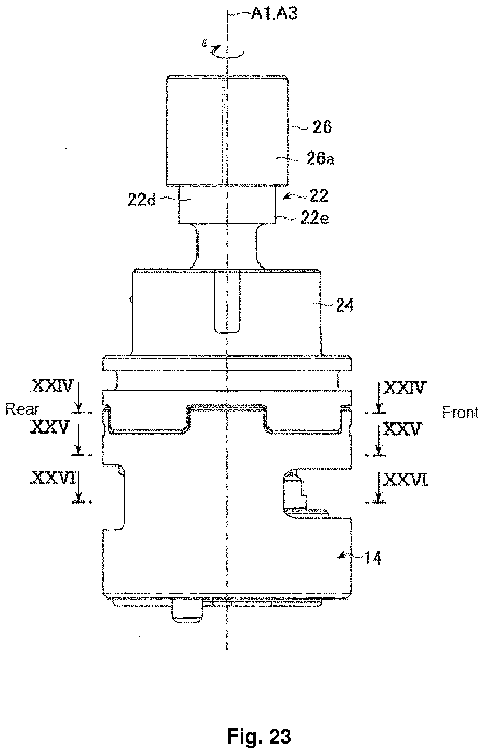

Next, Fig. 23 is a side view of the water mixing valve device according to the first embodiment of the present invention, illustrating a state in which the operating lever member is placed at a hot-water-side-most operating position within the hot-water operation range and the movable valve element is closed.

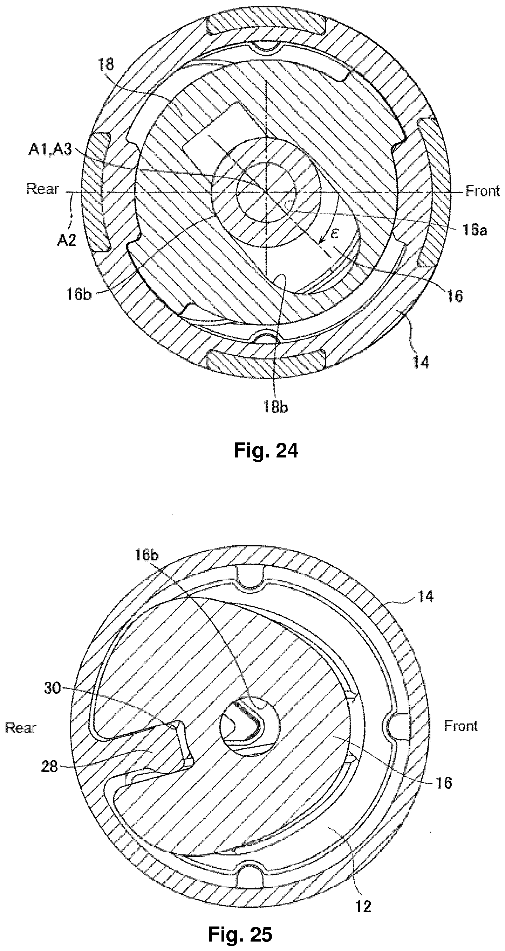

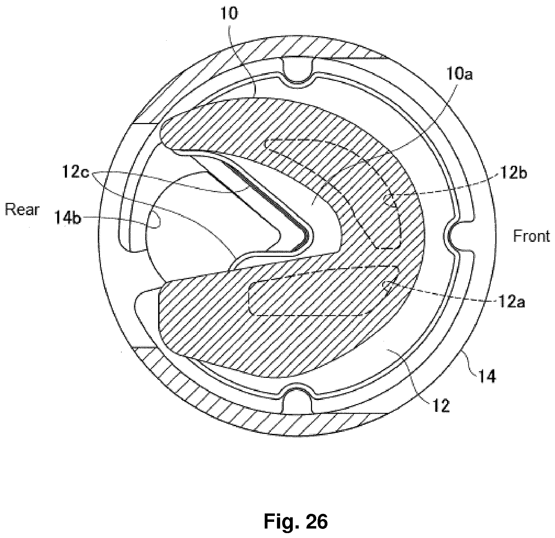

Further, Fig. 24 is a cross-sectional view taken along line XXIV-XXIV in Fig. 23, Fig. 25 is a cross-sectional view taken along line XXV-XXV in Fig. 23, and Fig. 26 is a cross-sectional view taken along line XXVI-XXVI in Fig. 23.

As illustrated in Fig. 1, Fig. 2, and Fig. 23, in the state in which the operating lever member 22 is placed at the hot-water-side-most operating position P1 within the hot-water operation range R1 and the movable valve element 10 is closed, the longitudinal central axis A3 of the operating lever member 22 matches the central axis A1 of the water mixing faucet device 2 extending in the vertical direction and the operating lever member 22 is upright.

Moreover, in Fig. 23, the front surface 26a of the operating lever upper connecting member 26 and the front surface 22e of an attachment section 22d of the operating lever member 22 to which the operating lever upper connecting member 26 is attached that are illustrated in Fig. 7 are turned in a clockwise direction by a predetermined angle ε centering the central axis A3 viewed from above.

Furthermore, as illustrated in Fig. 24, the operating lever holding member 18 is configured to turn, together with the operating lever member 22, by the predetermined angle ε centering the central axis A3, and the long side of the elongate guiding hole 18b of the operating lever holding member 18 illustrated in Fig. 24 is inclined by the predetermined angle ε with respect to the central axis A2 extending in the front-back direction of the lower casing member 14.

Further, in the state in which the movable valve element 10 is closed, the connecting section 22a of the operating lever member 22 is caused to turn idly with respect to the attachment hole 16a of the movable valve element guiding member 16 even if the operating lever member 22 is turned about the central axis A3, and therefore the movable valve element 10 and the movable valve element guiding member 16 may not be turned about the central axis A3.

In addition, the parts of the diagonally backward left region and the diagonally forward right region in the outer circumferential surface of the cylindrical projecting portion 16b of the movable valve element guiding member 16 when viewed from the front side of Fig. 24 are respectively in contact with the parts of the diagonally backward left region and the diagonally forward right region in the inner circumferential surface of the guiding hole 18b of the operating lever holding member 18 when viewed from the front side of Fig. 24.

Specifically, as illustrated in Fig. 1, Fig. 2, Fig. 25, and Fig. 26, in the state in which the operating lever member 22 is placed at the hot-water-side-most operating position P1 within the hot-water operation range R1 and the movable valve element 10 is closed, similarly to the state illustrated in Fig. 9 and Fig. 10 in which the operating lever member 22 is placed at the operating position P3 within the cold-water operation range R2 on the side of the mixed water operation range R3 and the movable valve element 10 is closed, or the state illustrated in Fig. 17 and Fig. 18 in which the operating lever member 22 is placed at the cold-water-side-most operating position P2 within the cold-water operation range R2 and the movable valve element 10 is closed, the movable valve element guiding member 16 and the movable valve element 10 thereunder are positioned at the portion on the backmost side within the lower casing member 14, and the movable valve element 10 closes both of the hot water channel 12a and the cold water channel 12b of the stationary valve element 12.

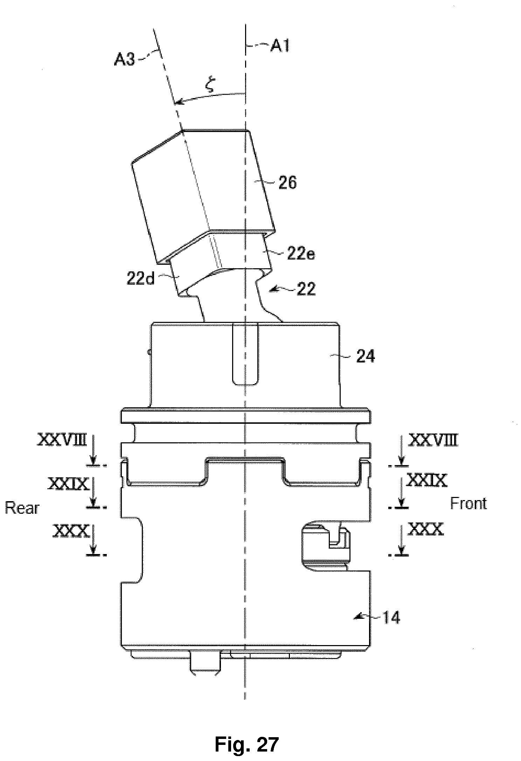

Next, Fig. 27 is a side view of the water mixing valve device according to the first embodiment of the present invention, illustrating a state in which the operating lever member is placed at the hot-water-side-most operating position within the hot-water operation range and the movable valve element is opened.

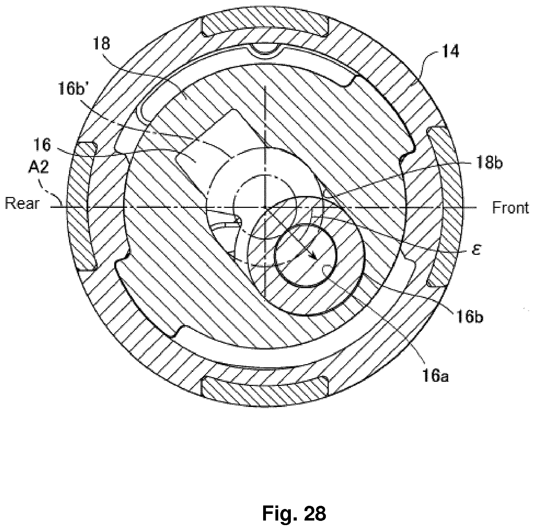

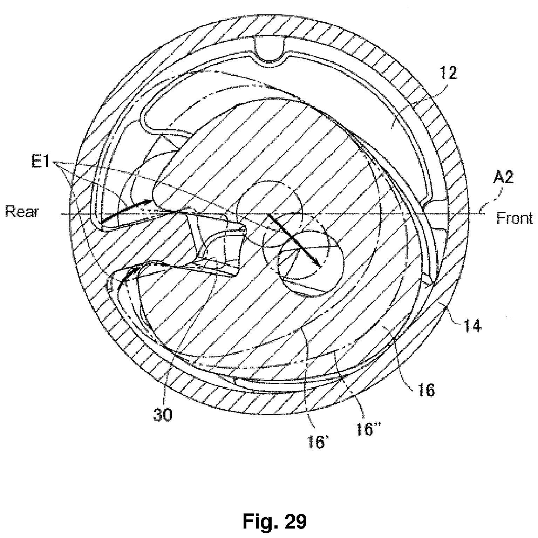

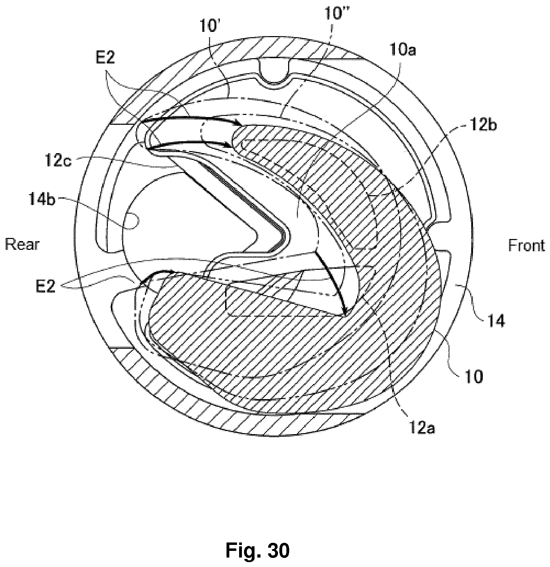

Further, Fig. 28 is a cross-sectional view taken along line XXVIII-XXVIII in Fig. 27, Fig. 29 is a cross-sectional view taken along line XXIX-XXIX in Fig. 27, and Fig. 30 is a cross-sectional view taken along line XXX-XXX in Fig. 27.

As illustrated in Fig. 1, Fig. 2, and Fig. 27, in the state in which the operating lever member 22 is placed at the hot-water-side-most operating position P1 within the hot-water operation range R1 and the movable valve element 10 is opened, the longitudinal central axis A3 of the operating lever member 22 is inclined diagonally backward by a predetermined angle ζ with respect to the central axis A1 of the water mixing faucet device 2 extending in the vertical direction.

Moreover, as illustrated in Fig. 1, Fig. 2, and Fig. 28, in the state in which the operating lever member 22 is placed at the hot-water-side-most operating position P1 within the hot-water operation range R1 and the movable valve element 10 is opened, the cylindrical projecting portion 16b of the movable valve element guiding member 16 is pressed diagonally forward left in Fig. 28 by the connecting section 22a of the operating lever member 22, and moved from the central axis A2 extending in the front-back direction of the lower casing member 14 toward a direction at the predetermined angle ε by the elongate guiding hole 18b of the operating lever holding member 18, such that a diagonally forward left region of the outer circumferential surface of the cylindrical projecting portion 16b of the movable valve element guiding member 16 viewed from the front side of Fig. 28 is in contact with a diagonally forward left region of the inner circumferential surface of the guiding hole 18b of the operating lever holding member 18 viewed from the front side of Fig. 28.

Here, in Fig. 28, an outline of the projecting portion 16b of the movable valve element guiding member 16 in the state in which the operating lever member 22 illustrated in Fig. 24 is placed at the hot-water-side-most operating position P1 within the hot-water operation range R1 and the movable valve element 10 is opened is represented by a dashed line 16b'.

Next, as illustrated in Fig. 29 and Fig. 30, the movable valve element guiding member 16 and the movable valve element 10 thereunder are positioned generally on a diagonally forward left side within the lower casing member 14 viewed from a front side of Fig. 29 and Fig. 30, and the movable valve element 10 keeps the cold water channel 12b of the stationary valve element 12 closed and partially opens only the hot water channel 12a of the stationary valve element 12. Further, hot water that have passed through the hot/cold water passage unit 10a of the movable valve element 10 from the partially opened hot water channel 12a of the stationary valve element 12 flows to the water mixing channel 14b of the lower casing member 14 through the water mixing channel 12c of the stationary valve element 12.

Moreover, in Fig. 29, the outline of the movable valve element guiding member 16 attached to the movable valve element 10 in the closed state illustrated in Fig. 25 is represented by the dashed line 16', and the outline of the movable valve element guiding member 16 attached to the movable valve element 10 in transition from the closed state to the opened state is represented by the dashed line 16". As illustrated in Fig. 25, during the transition from the movable valve element guiding member 16' of the movable valve element 10 in the closed state to the movable valve element guiding member 16 of the movable valve element 10 in the opened state, a part of the guiding groove 30 of the movable valve element guiding member 16 generally moves diagonally forward left viewed from a front side of Fig. 25 while in contact with the guiding projection 28 of the lower casing member 14, and while turning toward a direction indicated by an arrow E1 in Fig. 29 in a horizontal plane, moves toward the hot-water side (the side of the hot water channel 12a of the stationary valve element 12) in relative with the movable valve element guiding member 16 viewed from above with respect to the central axis A2 extending in the front-back direction of the stationary valve element 12.

Furthermore, in Fig. 30, the outline of the movable valve element 10 in the closed state illustrated in Fig. 26 is represented by the dashed line 10', and the outline of the movable valve element 10 in transition from the closed state to the opened state is represented by the dashed line 10". As illustrated in Fig. 30, during the transition from the movable valve element 10' in the closed state to the movable valve element 10 in the opened state, the hot/cold water passage unit 10a of the movable valve element 10 generally slides diagonally forward left viewed from the front side of Fig. 22 with respect to the stationary valve element 12 while the movable valve element 10 keeps the cold water channel 12b of the stationary valve element 12 closed, and moves relatively toward the hot-water side (the side of the hot water channel 12a of the stationary valve element 12) while turning toward a direction indicated by an arrow E2 in Fig. 30 in the horizontal plane.

Next, a relation between the stationary valve element and the movable valve element of the water mixing valve device according to the first embodiment of the present invention will be described in detail with reference to Fig. 1, Fig. 2, and Figs. 31 to 34.

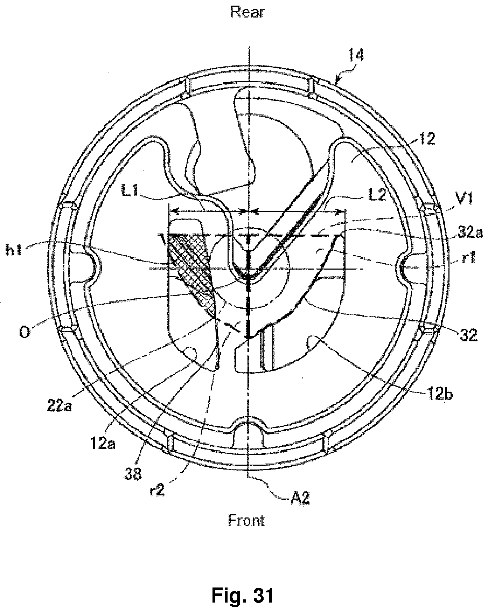

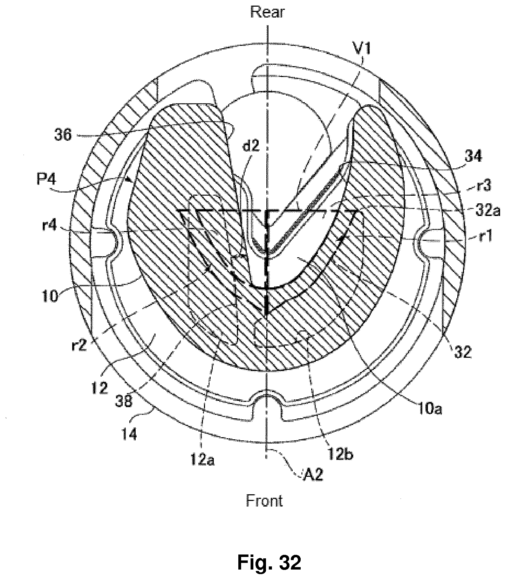

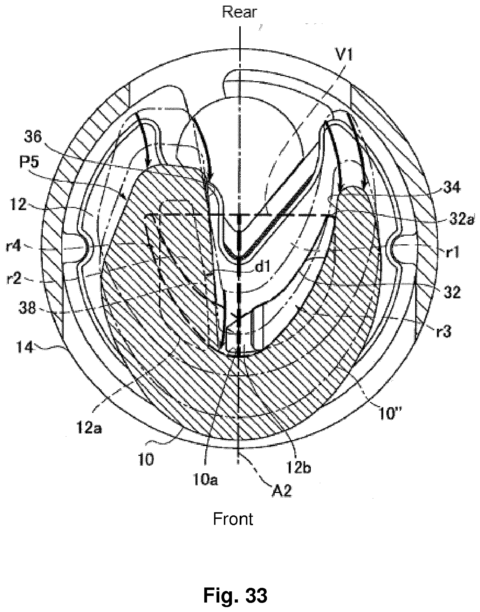

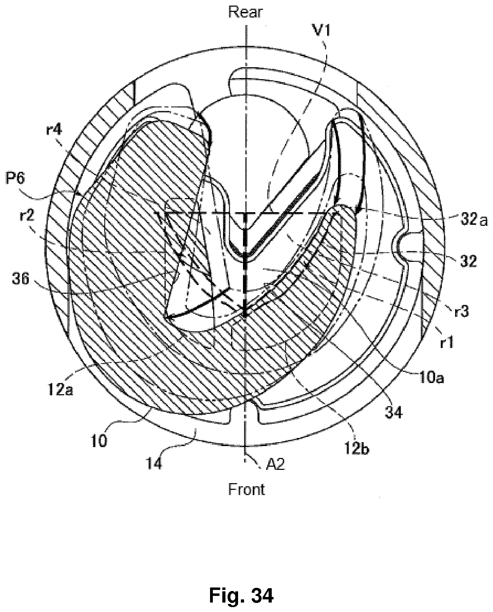

First, Fig. 31 is a view of a first region and a second region of the stationary valve element in the plan view of Fig. 5 illustrating the lower casing member and the stationary valve element of the water mixing valve device according to the first embodiment of the present invention. Further, Fig. 32 is a view of the stationary valve element and the movable valve element of the water mixing valve device according to the first embodiment of the present invention, illustrating a first region to a fourth region of the stationary valve element in a state in which the operating lever member is placed at an operating position within any of the cold-water operation range, the hot-water operation range, and the mixed water operation range and the movable valve element is closed. Moreover, Fig. 33 is a view of the stationary valve element and the movable valve element of the water mixing valve device according to the first embodiment of the present invention, illustrating the first region to the fourth region of the stationary valve element in the state in which the operating lever member is placed at the operating position on the side of the mixed water operation range within the cold-water operation range and the movable valve element is opened. Furthermore, Fig. 34 is a view of the stationary valve element and the movable valve element of the water mixing valve device according to the first embodiment of the present invention, illustrating the first region to the fourth region of the stationary valve element in the state in which the operating lever member is placed at the hot-water-side-most operating position within the hot-water operation range and the movable valve element is opened.

First, as illustrated in Fig. 31, the stationary valve element 12 includes a first region r1 and a second region r2; the first region r1 is defined so as to be enclosed by an inner edge 32 on a side of the center O of the lower casing member 14 of the cold water channel 12b, the central axis A2 extending in the front-back direction of the stationary valve element 12, and a perpendicular line V1 from a rear end 32a of the inner edge 32 of the cold water channel 12b to the central axis A2, and the second region r2 is provided symmetrically with respect to the first region r1 taking the central axis A2 of the stationary valve element 12 as a symmetry axis. In addition, a partial region h1 of the hot water channel 12a of the stationary valve element is provided within the second region r2.

Next, as illustrated in Fig. 32 through Fig. 34, the hot/cold water passage unit 10a of the movable valve element 10 includes a cold water channel side edge 34 provided for the stationary valve element 12 on a side of the cold water channel 12b and a hot water channel side edge 36 provided for the stationary valve element 12 on a side of the hot water channel 12a so as to face against the cold water channel side edge 34.

Further, the stationary valve element 12 includes a third region r3 and a fourth region r4; the third region r3 is defined so as to be enclosed by the cold water channel side edge 34 of the hot/cold water passage unit 10a of the movable valve element 10, the central axis A2 of the stationary valve element 12, and the perpendicular line V1 from the rear end 32a of the inner edge 32 of the cold water channel 12b to the central axis A2, and the fourth region r4 is provided symmetrically with respect to the third region r3 taking the central axis A2 of the stationary valve element 12 as a symmetry axis. In addition, a partial region of the hot water channel side edge 36 of the hot/cold water passage unit 10a of the movable valve element 10 is provided within the fourth region r4.

With this, the hot water channel 12a of the stationary valve element 12 is positioned closer to the central axis A2 of the stationary valve element 12 without providing the hot water channel 12a and the cold water channel 12b of the stationary valve element 12 symmetrically with respect to the central axis A2 of the stationary valve element 12. Therefore, as compared to a case in which the hot water channel 12a of the stationary valve element 12 is not positioned closer to the central axis A2 of the stationary valve element 12, it is possible to increase a flow rate of hot water that flows through the hot water channel 12a of the stationary valve element 12 when opening the movable valve element 10 to discharge mixed water.

Next, as illustrated in Fig. 1, Fig. 2, and Figs. 31 to 33, the hot water channel 12a of the stationary valve element 12 includes an inner edge 38 provided on a side of the hot/cold water passage unit 10a of the movable valve element 10. Further, it is assumed that a valve-closed position and a valve-opening position of the movable valve element 10 are P4 and P5, respectively, when the open/close operation of the movable valve element 10 is performed in the state in which the handle lever 4 is placed at the operating position P3 that is frequently used and positioned substantially in the center on the front side. A distance d1 between the inner edge 38 of the hot water channel 12a of the stationary valve element 12 and the hot water channel side edge 36 of the hot/cold water passage unit 10a of the movable valve element 10 where the inner edge 38 and the hot water channel side edge 36 are closest when the movable valve element 10 is at the valve-opening position P5 (see Fig. 33) is set to be smaller than a distance d2 between the inner edge 38 of the hot water channel 12a of the stationary valve element 12 and the hot water channel side edge 36 of the hot/cold water passage unit 10a of the movable valve element 10 where the inner edge 38 and the hot water channel side edge 36 are closest when the movable valve element 10 is at the valve-closed position P4 (see Fig. 32).

Further, as illustrated in Fig. 32 and Fig. 33, both of the inner edge 38 of the hot water channel 12a of the stationary valve element 12 and the hot water channel side edge 36 of the hot/cold water passage unit 10a of the movable valve element 10 are inclined so as to become closer to the central axis A2 of the stationary valve element 12 either toward a direction in which the movable valve element 10 moves from the valve-closed position P4 (see Fig. 32) to the valve-opening position P5 (see Fig. 33), or a direction from back to front of the movable valve element 10.

With this, as it is possible to maintain the distance between the inner edge 38 of the hot water channel 12a of the stationary valve element 12 and the hot water channel side edge 36 of the hot/cold water passage unit 10a of the movable valve element 10 to be large when the movable valve element 10 is at the valve-closed position P4 (see Fig. 32), water shutoff can be ensured, and it is possible to prevent water from leaking through the water outlet 6a of the spout 6 of the water mixing faucet device 2.

On the other hand, when the movable valve element 10 is at the valve-opening position P5 (see Fig. 33) in the state in which the handle lever 4 is placed at the operating position P3 that is frequently used and positioned substantially in the center on the front side, it is possible to decrease the distance between the inner edge 38 of the hot water channel 12a of the stationary valve element 12 and the hot water channel side edge 36 of the hot/cold water passage unit 10a of the movable valve element 10 as much as possible, and a cross-sectional area of a flow channel of the hot water channel 12a of the stationary valve element 12 can be set to be large. Therefore, in the case in which the movable valve element 10 is at the valve-opening position P5 (see Fig. 33), as illustrated in Fig. 2 and Fig. 34, when the handle lever 4 is turned by the turning operation to the hot-water side operating position P1 from the operating position P3 that is positioned substantially in the center on the front side, an area of a portion through which the hot water channel 12a of the stationary valve element 12 and the hot/cold water passage unit 10a of the movable valve element 10 are communicated with each other can be increased, and it is possible to further increase the flow rate of hot water that flows from the hot water channel 12a of the stationary valve element 12 to the hot/cold water passage unit 10a of the movable valve element 10.

Further, as illustrated in Fig. 1, Fig. 2, Fig. 31, and Fig. 32, when the handle lever 4 is turned by the turning operation about the central axis A1 while the movable valve element 10 is at the valve-closed position P4, the connecting section 22a of the operating lever member 22 turns idly with respect to the attachment hole 16a of the movable valve element guiding member 16 (see Fig. 4 and Fig. 6) as described above, and the movable valve element 10 may not slide or turn with respect to the stationary valve element 12. Accordingly, it is possible to prevent the movable valve element 10 in the closed state from opening the hot water channel 12a and the cold water channel 12b of the stationary valve element 12 by the turning operation of the handle lever 4.

On the other hand, when the handle lever 4 is turned by the turning operation about the central axis A1 while the movable valve element 10 is at the cold-water side valve-opening position P5 (see Fig. 33) or at the hot-water side valve-opening position P6 (see Fig. 34), the movable valve element 10 slides and turns with respect to the stationary valve element 12.

With this, in the case in which the movable valve element 10 is at the valve-closed position P4, a sliding range in which the movable valve element 10 slides with respect to the stationary valve element 12 is more restricted than that in the case in which the movable valve element 10 is at the valve-opening position P5 or P6, and the respective flow channels in the hot water channel 12a and the cold water channel 12b of the stationary valve element 12 can be set to be larger than those in a state in which the sliding range of the movable valve element 10 with respect to the stationary valve element 12 is less restricted than in the state in which the movable valve element is opened.

Next, an operation (action) of the water mixing valve device 1 described above according to the first embodiment of the present invention will be described.

In using the water mixing faucet device 2, when as illustrated in Fig. 1 and Fig. 2, the handle lever 4 of the water mixing faucet device 2 is turned about the central axis A1 to be placed at the operating position P3 that is frequently used and positioned substantially in the center on the front side of the water mixing faucet device 2, and the handle lever 4 is operated to the direction indicated by the arrow "open", as illustrated in Fig. 11 through Fig. 14, operating the operating lever member 22 of the water mixing valve device 1 causes the movable valve element 10 to slide with respect to the stationary valve element 12 while turning toward the hot-water side, and to open only the cold water channel 12b of the stationary valve element 12 while maintaining the hot water channel 12a of the stationary valve element 12 in the closed state. Then, the cold water that flows from the cold water channel 12b of the stationary valve element 12 through the hot/cold water passage unit 10a of the movable valve element 10 is discharged from the water outlet 6a of the spout 6 of the water mixing faucet device 2 through the water mixing channel 12c of the stationary valve element 12.

Further, when the handle lever 4 is turned by the turning operation to the cold-water side (the direction indicated by the arrow C illustrated in Fig. 1 and Fig. 2) to be placed at the operating position P2, and the handle lever 4 is operated to the direction indicated by the arrow "open", as illustrated in Fig. 19 through Fig. 22, operating the operating lever member 22 of the water mixing valve device 1 causes the movable valve element 10 to slide with respect to the stationary valve element 12 while turning toward the cold-water side, and to open only the cold water channel 12b of the stationary valve element 12 while maintaining the hot water channel 12a of the stationary valve element 12 in the closed state. Then, the cold water that flows from the cold water channel 12b of the stationary valve element 12 through the hot/cold water passage unit 10a of the movable valve element 10 is discharged from the water outlet 6a of the spout 6 of the water mixing faucet device 2 through the water mixing channel 12c of the stationary valve element 12.

Moreover, when the handle lever 4 is turned by the turning operation to the hot-water side (the direction indicated by the arrow H illustrated in Fig. 1 and Fig. 2) to be placed at the operating position P1, and the handle lever 4 is operated to the direction indicated by the arrow "open", as illustrated in Fig. 26 through Fig. 30, operating the operating lever member 22 of the water mixing valve device 1 causes the movable valve element 10 to slide with respect to the stationary valve element 12 while turning toward the hot-water side, and to open only the hot water channel 12a of the stationary valve element 12 while maintaining the cold water channel 12b of the stationary valve element 12 in the closed state. Then, the hot water that flows from the hot water channel 12a of the stationary valve element 12 through the hot/cold water passage unit 10a of the movable valve element 10 is discharged from the water outlet 6a of the spout 6 of the water mixing faucet device 2 through the water mixing channel 12c of the stationary valve element 12.

Furthermore, when the handle lever 4 is turned by the turning operation to the hot-water side (the direction indicated by the arrow H illustrated in Fig. 1 and Fig. 2) to be placed at the operating position in the mixed water operation range R3 between the operating position P1 and the operating position P3, and the handle lever 4 is operated to the direction indicated by the arrow "open", operating the operating lever member 22 of the water mixing valve device 1 causes the movable valve element 10 to slide with respect to the stationary valve element 12 while turning toward the hot-water side, and to open both of the hot water channel 12a and the cold water channel 12b of the stationary valve element 12. Then, mixed water of the hot water and the cold water flowing respectively from the hot water channel 12a and the cold water channel 12b of the stationary valve element 12 mixed in the hot/cold water passage unit 10a of the movable valve element 10 is discharged from the water outlet 6a of the spout 6 of the water mixing faucet device 2 through the water mixing channel 12c of the stationary valve element 12.

According to the water mixing valve device 1 of the first embodiment of the present invention described above, moving the movable valve element 10 in the closed state to the opened state by operating the handle lever 4 and the operating lever member 22 when the handle lever 4 and the operating lever member 22 are at the operating position P3 on the side of the mixed water operation range R3 within the cold-water operation range R2 allows the movable valve element 10 to move and turn with respect to the stationary valve element 12 toward the direction in which the opening cross-sectional area of the cold water channel 12b of the stationary valve element 12 is increased while maintaining the hot water channel 12a of the stationary valve element 12 closed. Accordingly, it is possible to discharge a relatively large amount of water from the water outlet 6a of the water mixing faucet device 2 even when the handle lever 4 and the operating lever member 22 are positioned on the side of the mixed water operation range R3 within the cold-water operation range R2 that is a relatively frequently used discharge operation position. Thus, water can be discharged from the user-friendly water mixing faucet device 2.

Further, when the handle lever 4 and the operating lever member 22 are placed at the discharge operation position P3 that is relatively frequently used, it is possible to discharge a relatively large amount of water from the water outlet 6a of the water mixing faucet device 2 even though the movable valve element 10 moves with respect to the stationary valve element 12 while turning toward the hot-water side. Therefore, it is possible to downsize the water mixing valve device 1 as well as the water mixing faucet device 2 while securing a sufficient amount of water to be discharged. In addition, it is possible to save hot water at the discharge operation position P3 that is relatively frequently used.

Moreover, according to the water mixing valve device 1 of this embodiment, a guiding direction of the guiding projection 28 of the lower casing member 14 as guiding means configured to guide the movement of the movable valve element 10 and the movable valve element 10 guided by the guiding groove 30 of the movable valve element guiding member 16 is set to be a direction inclined so as to become closer to the central axis A2 extending in the front-back direction of the stationary valve element 12. Accordingly, by moving the movable valve element 10 in the closed state to the opened state by operating the handle lever 4 and the operating lever member 22, the movable valve element 10 is guided by the guiding projection 28 of the lower casing member 14 and the guiding groove 30 of the movable valve element guiding member 16, and moves and turns with respect to the stationary valve element 12. Thus, the movable valve element 10 can be opened and closed efficiently in a relatively small space within the lower casing member 14, and it is possible to downsize the water mixing valve device 1. In addition, it is possible to discharge a relatively large amount of water from the water outlet 6a of the water mixing faucet device 2 even when the handle lever 4 and the operating lever member 22 are positioned on the side of the mixed water operation range R3 within the cold-water operation range R2 that is the frequently used discharge operation position P3, and water can be discharged from the user-friendly water mixing faucet device 2.

Furthermore, according to the water mixing valve device 1 of this embodiment, moving the movable valve element 10 in the closed state to the opened state by operating the handle lever 4 and the operating lever member 22 when the handle lever 4 and the operating lever member 22 are on the side of the mixed water operation range R3 within the cold-water operation range R2 allows the movable valve element 10 to move and turn with respect to the stationary valve element 12 toward the direction in which the opening cross-sectional area of the cold water channel 12b of the stationary valve element 12 is increased while maintaining the hot water channel 12a of the stationary valve element 12 closed to move the hot/cold water passage unit 10a of the movable valve element 10 toward the side of the cold water channel 12b of the stationary valve element 12. This is not advantageous for discharging hot water. However, it is possible to secure the flow rate of hot water when discharging mixed water from the water outlet 6a of the water mixing faucet device 2, as the hot water channel 12a and the cold water channel 12b of the stationary valve element 12 are provided in shapes different from each other and asymmetrically with respect to a central axis A2 of the stationary valve element 12 such that the maximum distance L1 is smaller than the maximum distance L2; the maximum distance L1 is the length of the perpendicular line from the outermost position of the hot water channel 12a of the stationary valve element 12 (the leftmost position of the hot water channel 12a in Fig. 5) to the central axis A2 extending in the front-back direction of the stationary valve element 12, and the maximum distance L2 is the length of the perpendicular line from the outermost position of the cold water channel 12b of the stationary valve element 12 (the rightmost position of the cold water channel 12b in Fig. 5) to the central axis A2 of the stationary valve element 12.

Further, according to the water mixing valve device 1 of this embodiment, with the substantially hemispherical connecting section 22a of the operating lever member 22 and an attachment cross section of the attachment hole 16a, whose cross-sectional shape is substantially circular and in and to which the connecting section 22a is inserted and attached, of the movable valve element guiding member 16 above the movable valve element 10, in a state in which the movable valve element 10 is closed, turning the operating lever member 22 about the central axis A3 causes the operating lever member 22 to turn idly with respect to the attachment hole 16a of the movable valve element guiding member 16 and the movable valve element 10 may not be turned in the horizontal plane, and in a state in which the movable valve element 10 is opened, turning the operating lever member 22 about the central axis A3 causes the movable valve element 10 to move while turning with respect to the stationary valve element 12. Thus, the movable valve element 10 can be opened and closed efficiently.

Moreover, according to the water mixing valve device 1 of this embodiment, when the handle lever 4 is turned by the turning operation about the central axis A1 while the movable valve element 10 is at the valve-closed position P4, the range in which the movable valve element 10 slides with respect to the stationary valve element 12 is more restricted than that in the case in which the movable valve element 10 is at the valve-opening position P5 or P6. Accordingly, it is possible to prevent the movable valve element 10 in the closed state from opening the hot water channel 12a and the cold water channel 12b of the stationary valve element 12 by the turning operation of the handle lever 4. Therefore, when the handle lever 4 is turned by the turning operation about the central axis A1 while the movable valve element 10 is at the valve-closed position P4, the respective flow channels in the hot water channel 12a and the cold water channel 12b of the stationary valve element 12 can be set to be larger than those in the case in which the movable valve element 10 is at the valve-opening position P5 or P6 and the range in which the movable valve element 10 slides with respect to the stationary valve element 12 is not restricted.

Furthermore, the hot water channel 12a and the cold water channel 12b of the stationary valve element 12 are provided in shapes different from each other and asymmetrically with respect to the central axis A2 of the stationary valve element 12 such that the maximum distance L1 is smaller than the maximum distance L2; the maximum distance L1 is the length of the perpendicular line from the outermost position of the hot water channel 12a of the stationary valve element 12 (the leftmost position of the hot water channel 12a in Fig. 5 and Fig. 31) to the central axis A2 extending in the front-back direction of the stationary valve element 12, and the maximum distance L2 is the length of the perpendicular line from the outermost position of the cold water channel 12b of the stationary valve element 12 (the rightmost position of the cold water channel 12b in Fig. 5 and Fig. 31) to the central axis A2 of the stationary valve element 12. Accordingly, the hot water channel 12a of the stationary valve element 12 can be positioned closer to the central axis A2 of the stationary valve element 12. Therefore, as compared to the case in which the hot water channel 12a of the stationary valve element 12 is not positioned closer to the central axis A2 of the stationary valve element 12, it is possible to increase a flow rate of hot water that flows through the hot water channel 12a of the stationary valve element 12 when opening the movable valve element 10 to discharge mixed water. Further, by performing the open/close operation of the movable valve element 10 in the state in which the handle lever 4 is placed at the operating position P3 that is frequently used and positioned substantially in the center on the front side, it is possible to discharge only cold water from the water outlet 6a of the spout 6. In addition, in the state in which only cold water is discharged in this manner, as illustrated in Fig. 2 and Fig. 34, when the handle lever 4 is turned by the turning operation to the hot-water side operating position P1 from the operating position P3 that is positioned substantially in the center on the front side, an area of a portion through which the hot water channel 12a of the stationary valve element 12 and the hot/cold water passage unit 10a of the movable valve element 10 are communicated with each other can be increased, and it is possible to further increase the flow rate of hot water that flows from the hot water channel 12a of the stationary valve element 12 to the hot/cold water passage unit 10a of the movable valve element 10. Thus, it is possible to achieve the user friendliness, as when the handle lever 4 is at the discharge operation position P3 that is frequently used, only water can be discharged while securing a sufficient amount of water to be discharged from the water outlet 6a of the spout 6, and the flow rate of hot water that flows through the hot water channel 12a of the stationary valve element 12 can be increased when opening the movable valve element 10 to discharge mixed water.

Moreover, according to the water mixing valve device 1 of this embodiment, the stationary valve element 12 includes the first region r1 and the second region r2; the first region r1 is defined so as to be enclosed by the inner edge 32 in the cold water channel 12b on the side of the center O of the lower casing member 14, the central axis A2 extending in the front-back direction of the stationary valve element 12, and the perpendicular line V1 from the rear end 32a of the inner edge 32 of the cold water channel 12b to the central axis A2, and the second region r2 is provided symmetrically with respect to the first region r1 taking the central axis A2 of the stationary valve element 12 as the symmetry axis. Further, the partial region h1 of the hot water channel 12a of the stationary valve element 12 is provided within the second region r2. Accordingly, the hot water channel 12a of the stationary valve element 12 can be positioned closer to the central axis A2 of the stationary valve element 12 without providing the hot water channel 12a and the cold water channel 12b of the stationary valve element 12 symmetrically with respect to the central axis A2 of the stationary valve element 12. Therefore, as compared to the case in which the hot water channel 12a of the stationary valve element 12 is not positioned closer to the central axis A2 of the stationary valve element 12, it is possible to increase the flow rate of hot water that flows through the hot water channel 12a of the stationary valve element 12 when opening the movable valve element 10 to discharge mixed water. Therefore, by performing the open/close operation of the movable valve element 10 in the state in which the handle lever 4 is placed at the operating position P3 that is frequently used and positioned substantially in the center on the front side, it is possible to discharge only cold water from the water outlet 6a of the spout 6. In the state in which only cold water is discharged in this manner, as illustrated in Fig. 2 and Fig. 34, when the handle lever 4 is turned by the turning operation to the hot-water side operating position P1 from the operating position P3 that is positioned substantially in the center on the front side, the area of the portion through which the hot water channel 12a of the stationary valve element 12 and the hot/cold water passage unit 10a of the movable valve element 10 are communicated with each other can be increased, and it is possible to further increase the flow rate of hot water that flows from the hot water channel 12a of the stationary valve element 12 to the hot/cold water passage unit 10a of the movable valve element 10. Thus, it is possible to achieve the user friendliness, as when the handle lever 4 is at the discharge operation position P3 that is frequently used, only water can be discharged while securing a sufficient amount of water to be discharged from the water outlet 6a of the spout 6, and the flow rate of hot water that flows through the hot water channel 12a of the stationary valve element 12 can be increased when opening the movable valve element 10 to discharge mixed water.

Furthermore, according to the water mixing valve device 1 of this embodiment, the stationary valve element 12 includes the third region r3 and the fourth region r4; the third region r3 is defined so as to be enclosed by the cold water channel side edge 34 of the hot/cold water passage unit 10a of the movable valve element 10, the central axis A2 of the stationary valve element 12, and the perpendicular line V1 from the rear end 32a of the inner edge 32 of the cold water channel 12b to the central axis A2, and the fourth region r4 is provided symmetrically with respect to the third region r3 taking the central axis A2 of the stationary valve element 12 as the symmetry axis. Further, the partial region of the hot water channel side edge 36 of the hot/cold water passage unit 10a of the movable valve element 10 is provided within the fourth region r4. Accordingly, the hot water channel 12a of the stationary valve element 12 can be positioned closer to the central axis A2 of the stationary valve element 12 without providing the hot water channel 12a and the cold water channel 12b of the stationary valve element 12 symmetrically with respect to the central axis A2 of the stationary valve element 12. Therefore, as compared to the case in which the hot water channel 12a of the stationary valve element 12 is not positioned closer to the central axis A2 of the stationary valve element 12, it is possible to increase the flow rate of hot water that flows through the hot water channel 12a of the stationary valve element 12 when opening the movable valve element 10 to discharge mixed water.

Further, according to the water mixing valve device 1 of this embodiment, when the open/close operation of the movable valve element 10 is performed in the state in which the handle lever 4 is placed at the operating position P3 that is frequently used and positioned substantially in the center on the front side, the distance d1 between the inner edge 38 of the hot water channel 12a of the stationary valve element 12 and the hot water channel side edge 36 of the hot/cold water passage unit 10a of the movable valve element 10 where the inner edge 38 and the hot water channel side edge 36 are closest when the movable valve element 10 is at the valve-opening position P5 (see Fig. 33) is set to be smaller than the distance d2 between the inner edge 38 of the hot water channel 12a of the stationary valve element 12 and the hot water channel side edge 36 of the hot/cold water passage unit 10a of the movable valve element 10 where the inner edge 38 and the hot water channel side edge 36 are closest when the movable valve element 10 is at the valve-closed position P4 (see Fig. 32). In addition, both of the inner edge 38 of the hot water channel 12a of the stationary valve element 12 and the hot water channel side edge 36 of the hot/cold water passage unit 10a of the movable valve element 10 are inclined so as to become closer to the central axis A2 of the stationary valve element 12 either toward a direction in which the movable valve element 10 moves from the valve-closed position P4 (see Fig. 32) to the valve-opening position P5 (see Fig. 33), or a direction from back to front of the movable valve element 10.

With this, in the state in which the handle lever 4 is placed at the operating position P3 that is frequently used and positioned substantially in the center on the front side, it is possible to maintain the distance between the inner edge 38 of the hot water channel 12a of the stationary valve element 12 and the hot water channel side edge 36 of the hot/cold water passage unit 10a of the movable valve element 10 to be larger when the movable valve element 10 is at the valve-closed position P4 than when the movable valve element 10 is at the valve-opening position P5. Therefore, water shutoff can be ensured, and it is possible to prevent water from leaking through the water outlet 6a of the spout 6 of the water mixing faucet device 2.

On the other hand, when the movable valve element 10 is at the valve-opening position P5 in the state in which the handle lever 4 is placed at the operating position P3 that is frequently used and positioned substantially in the center on the front side, it is possible to decrease the distance between the inner edge 38 of the hot water channel 12a of the stationary valve element 12 and the hot water channel side edge 36 of the hot/cold water passage unit 10a of the movable valve element 10 as much as possible, and thus a cross-sectional area of a flow channel of the hot water channel 12a of the stationary valve element 12 can be set to be large. Therefore, by performing the open/close operation of the movable valve element 10 in the state in which the handle lever 4 is placed at the operating position P3 that is frequently used and positioned substantially in the center on the front side, it is possible to discharge or stop discharging only cold water from the water outlet 6a of the spout 6. In addition, in the state in which only cold water is discharged in this manner, as illustrated in Fig. 2 and Fig. 34, when the handle lever 4 is turned by the turning operation to the hot-water side operating position P1 from the operating position P3 that is positioned substantially in the center on the front side, the area of the portion through which the hot water channel 12a of the stationary valve element 12 and the hot/cold water passage unit 10a of the movable valve element 10 are communicated with each other can be further increased, and it is possible to further increase the flow rate of hot water that flows from the hot water channel 12a of the stationary valve element 12 to the hot/cold water passage unit 10a of the movable valve element 10.

### Second Embodiment

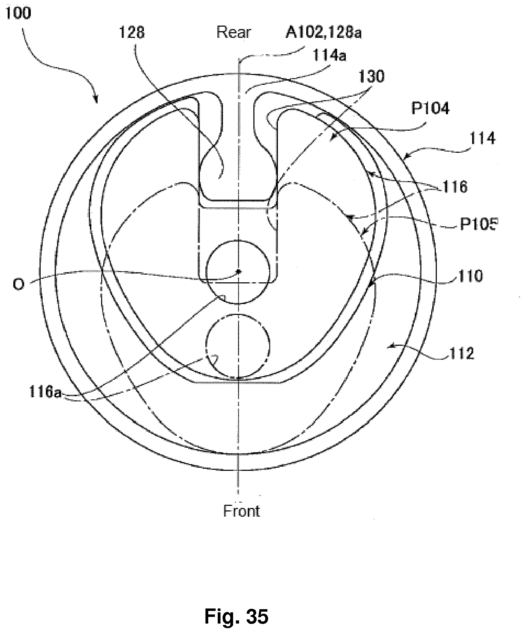

Next, the water mixing valve device according to a second embodiment of the present invention will be described with reference to Fig. 35 through Fig. 39.

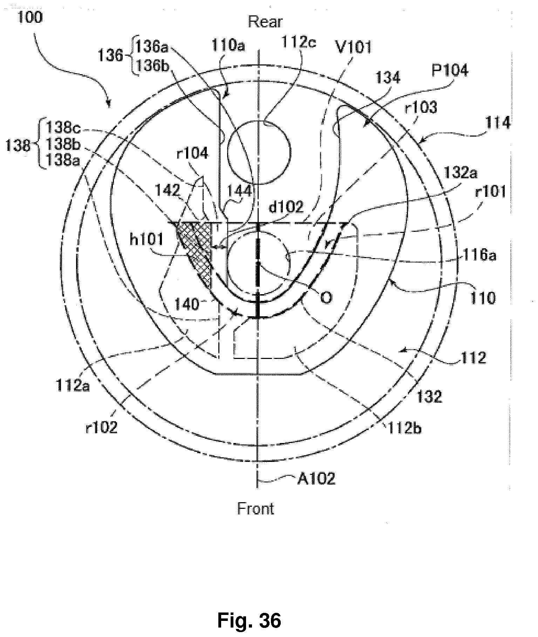

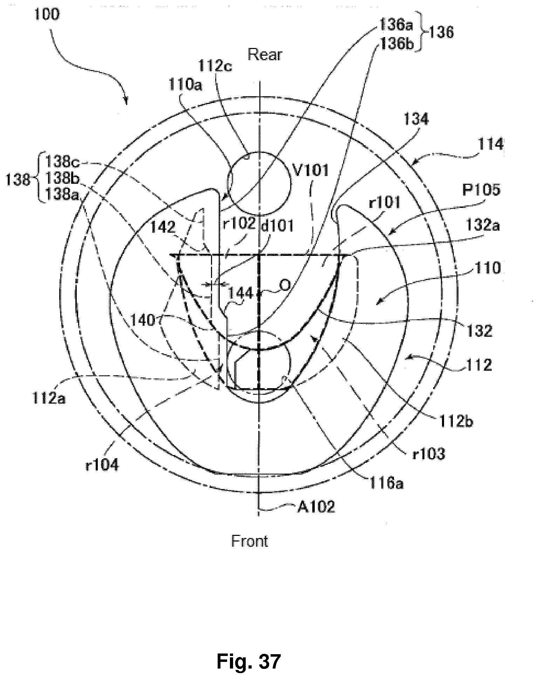

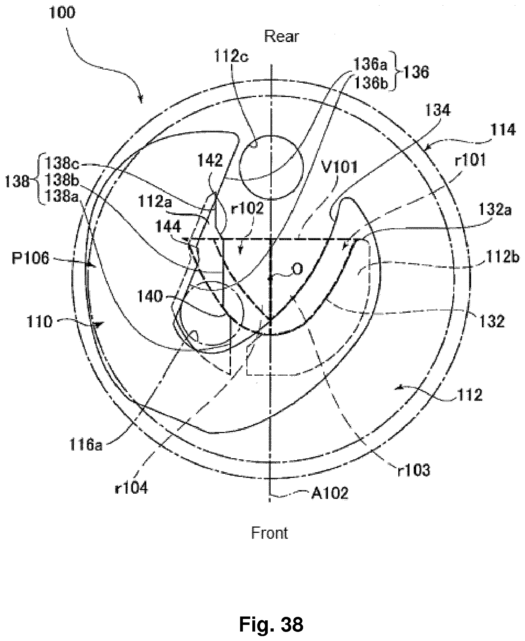

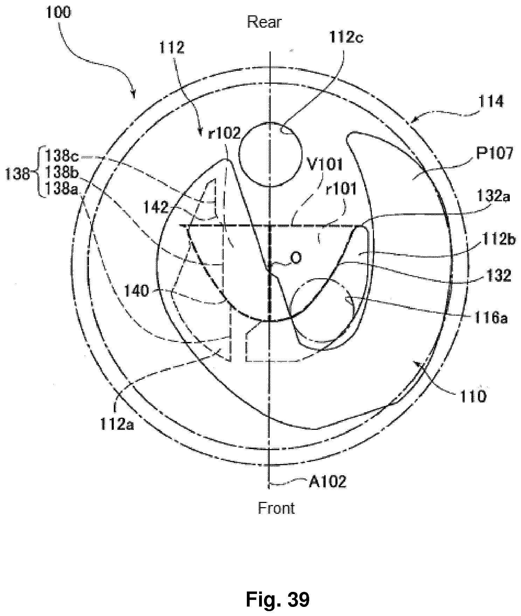

First, Fig. 35 is a plan view illustrating a lower casing member and a movable valve element guiding member of a water mixing valve device according to the second embodiment of the present invention in a state in which an operating lever member is placed at an operating position on a side of a mixed water operation range within a cold-water operation range and a movable valve element is closed. Next, Fig. 36 is a plan view illustrating a stationary valve element and the movable valve element of the water mixing valve device according to the second embodiment of the present invention in the state in which the operating lever member is placed at the operating position on the side of the mixed water operation range within the cold-water operation range and the movable valve element is closed. Further, Fig. 37 is a plan view illustrating a stationary valve element and the movable valve element of the water mixing valve device according to the second embodiment of the present invention in the state in which the operating lever member is placed at the operating position on the side of the mixed water operation range within the cold-water operation range and the movable valve element is opened. Moreover, Fig. 38 is a plan view illustrating the stationary valve element and the movable valve element of the water mixing valve device according to the second embodiment of the present invention in a state in which the operating lever member is placed at the hot-water-side-most operating position within the hot-water operation range and the movable valve element is opened. Furthermore, Fig. 39 is a plan view illustrating the stationary valve element and the movable valve element of the water mixing valve device according to the second embodiment of the present invention in a state in which the operating lever member is placed at the cold-water-side-most operating position within the cold-water operation range and the movable valve element is opened.

It should be noted that, for a water mixing valve device 100 according to the second embodiment of the present invention illustrated in Fig. 35 through Fig. 39, only differences from the water mixing valve device 1 according to the first embodiment of the present invention will be described. Like components and features as those of the water mixing valve device 1 according to the first embodiment of the present invention are denoted by like reference numerals and descriptions for these components and features shall be omitted.

First, as illustrated in Fig. 35, in the water mixing valve device 100 according to the second embodiment of the present invention, a movable valve element guiding member 116 built within a lower casing member 114 and configured to guide sliding of a movable valve element 110 with respect to a stationary valve element 112, and a guiding projection 128 provided on a rear end 114a of the lower casing member 114 on an inner circumference side and inserted and fitted into a guiding groove 130 of the movable valve element guiding member 116 are different from the movable valve element guiding member 16 and the guiding projection 28 in the water mixing valve device 1 according to the first embodiment of the present invention described above.

Further, as illustrated in Fig. 36 through Fig. 39, in the water mixing valve device 100 according to the second embodiment of the present invention, the shape of a hot water channel 112a of the stationary valve element 112 built within the lower casing member 114 is different from that of the hot water channel 12a of the stationary valve element 12 of the water mixing valve device 1 according to the first embodiment of the present invention described above, and the shape of a hot water channel side edge 136 of a hot/cold water passage unit 110a of the movable valve element 110 is different from that of the hot water channel side edge 36 of the hot/cold water passage unit 10a of the movable valve element 10 in the water mixing valve device 1 according to the first embodiment of the present invention described above.

Describing more specifically regarding these differences, as illustrated in Fig. 35, the guiding projection 128 is provided so as to project forward from the rear end 114a of the lower casing member 114 on the inner circumference side, and a central axis 128a of the guiding projection 128 extends upward and downward parallelly to a central axis A102 extending in a front-back direction of the stationary valve element 112, and matches in a planar view illustrated in Fig. 35. Therefore, in the state in which the handle lever 4 illustrated in Fig. 2 is placed at the operating position P3 that is frequently used and positioned substantially in the center on the front side, if the open/close operation of the movable valve element 110 is performed from a valve-closed position P104 (see Fig. 35 and Fig. 36) to a valve-opening position P105 (see Fig. 35 and Fig. 37), an attachment hole 116a of the movable valve element guiding member 116 in which the connecting section 22a of the operating lever member 22 is attached moves forward, and while maintaining the state in which the guiding groove 130 of the movable valve element guiding member 116 is fitted with the guiding projection 128, the movable valve element guiding member 116 moves, along with the movable valve element 110, from the valve-closed position P104 (see Fig. 35 and Fig. 36) to the valve-opening position P105 (see Fig. 35 and Fig. 37) straightly forward without turning.

Further, as illustrated in Fig. 35, at the valve-opening position P105, the guiding groove 130 of the movable valve element guiding member 116 is out of the fitting with the guiding projection 128. In this state, as illustrated in Fig. 37, only a cold water channel 112b of the stationary valve element 112 is opened by the movable valve element 110, and only cold water is discharged from the water outlet 6a of the spout 6 in the state in which the handle lever 4 is placed at the operating position P3 that is frequently used and positioned substantially in the center on the front side.

Moreover, as illustrated in Fig. 35 and Fig. 37, in the state in which the guiding groove 130 of the movable valve element guiding member 116 at the valve-opening position P105 is out of the fitting with the guiding projection 128, by further turning the handle lever 4 illustrated in Fig. 2 by the turning operation to the hot-water side operating position P1 or to the cold-water side operating position P2, the movable valve element 110 can turn and slide along an upper surface of the stationary valve element 112. Therefore, in the state in which only cold water is discharged from the water outlet 6a of the spout 6 where the handle lever 4 is placed at the operating position P3 that is frequently used and positioned substantially in the center on the front side, it is possible to change the position of the movable valve element 110 over to a further hot-water side valve-opening position P106 (see Fig. 38) to increase a flow rate of hot water to be discharged from the water outlet 6a of the spout 6, or to change the movable valve element 110 over to a further cold-water side valve-opening position P107 (see Fig. 39) to increase a flow rate of cold water to be discharged from the water outlet 6a of the spout 6.

Next, as illustrated in Fig. 36 through Fig. 39, an inner edge 138 of the hot water channel 112a of the stationary valve element 112 includes a first inner edge 138a, a second inner edge 138b, and a third inner edge 138c; the first inner edge 138a is positioned most proximally to the central axis A102 of the stationary valve element 112 and on a frontmost side in the inner edge 138, the second inner edge 138b is positioned more distally from the central axis A102 and more backward than the first inner edge 138a, and the third inner edge 138c is positioned most distally from the central axis A102 of the stationary valve element 112 and more backward than the second inner edge 138b. In addition, the inner edge 138 of the hot water channel 112a of the stationary valve element 112 further includes a first stepped portion 140 provided so as to connect a rear end of the first inner edge 138a and a front end of the second inner edge 138b, and a second stepped portion 142 provided so as to connect a rear end of the second inner edge 138b and a front end of the third inner edge 138c.

Furthermore, as illustrated in Fig. 36 and Fig. 37, the hot water channel side edge 136 of the hot/cold water passage unit 110a of the movable valve element 110 includes a first hot water channel side edge 136a and a second hot water channel side edge 136b; the first hot water channel side edge 136a is positioned proximally to the central axis A102 of the stationary valve element 112 and on the front side, and the second hot water channel side edge 136b is positioned more distally from the central axis A102 and more backward than the first hot water channel side edge 136a. In addition, the hot water channel side edge 136 of the hot/cold water passage unit 110a of the movable valve element 110 further includes a stepped portion 144 provided so as to connect a rear end of the first hot water channel side edge 136a and a front end of the second hot water channel side edge 136b.

Next, as illustrated in Fig. 36 through Fig. 39, the stationary valve element 112 includes a first region r101 and a second region r102; the first region r101 is defined so as to be enclosed by an inner edge 132 on a side of a center O of the lower casing member 114 of the cold water channel 112b, the central axis A102 extending in the front-back direction of the stationary valve element 112, and a perpendicular line V101 from a rear end 132a of the inner edge 132 of the cold water channel 112b to the central axis A102, and the second region r102 is provided symmetrically with respect to the first region r101 taking the central axis A102 of the stationary valve element 112 as a symmetry axis. In addition, a partial region h101 of the hot water channel 112a of the stationary valve element is provided within the second region r102.

With this, the hot water channel 112a of the stationary valve element 112 is positioned closer to the central axis A102 of the stationary valve element 112 without providing the hot water channel 112a and the cold water channel 112b of the stationary valve element 112 symmetrically with respect to the central axis A102 of the stationary valve element 112. Therefore, as compared to a case in which the hot water channel 112a of the stationary valve element 112 is not positioned closer to the central axis A102 of the stationary valve element 112, it is possible to increase a flow rate of hot water that flows through the hot water channel 112a of the stationary valve element 112 when opening the movable valve element 110 to discharge mixed water.

Then, as illustrated in Fig. 36 through Fig. 38, the stationary valve element 112 includes a third region r103 and a fourth region r104; the third region r103 is defined so as to be enclosed by a cold water channel side edge 134 of the hot/cold water passage unit 110a of the movable valve element 110, the central axis A102 of the stationary valve element 112, and the perpendicular line V101 from the rear end 132a of the inner edge 132 of the cold water channel 112b to the central axis A102, and the fourth region r104 is provided symmetrically with respect to the third region r103 taking the central axis A102 of the stationary valve element 112 as a symmetry axis. In addition, a partial region of the hot water channel side edge 136 of the hot/cold water passage unit 110a of the movable valve element 110 is provided within the fourth region r104.

With this, the hot water channel 112a of the stationary valve element 112 is positioned closer to the central axis A102 of the stationary valve element 112 without providing the hot water channel 112a and the cold water channel 112b of the stationary valve element 112 symmetrically with respect to the central axis A102 of the stationary valve element 112. Therefore, as compared to a case in which the hot water channel 112a of the stationary valve element 112 is not positioned closer to the central axis A102 of the stationary valve element 112, it is possible to increase a flow rate of hot water that flows through the hot water channel 112a of the stationary valve element 112 when opening the movable valve element 110 to discharge mixed water (see Fig. 38).

Next, as illustrated in Fig. 36 and Fig. 37, when the open/close operation of the movable valve element 110 is performed in the state in which the handle lever 4 is placed at the operating position P3 that is frequently used and positioned substantially in the center on the front side, a distance d101 (see Fig. 37) between the inner edge 138 of the hot water channel 112a of the stationary valve element 112 and the hot water channel side edge 136 of the hot/cold water passage unit 110a of the movable valve element 110 where the inner edge 138 and the hot water channel side edge 136 are closest when the movable valve element 110 is at the valve-opening position P105 (see Fig. 37) is set to be smaller than a distance d102 between the inner edge 138 of the hot water channel 112a of the stationary valve element 112 and the hot water channel side edge 136 of the hot/cold water passage unit 110a of the movable valve element 110 where the inner edge 138 and the hot water channel side edge 136 are closest when the movable valve element 110 is at the valve-closed position P104 (see Fig. 36).

With this, as it is possible to maintain the distance between the inner edge 138 of the hot water channel 112a of the stationary valve element 112 and the hot water channel side edge 136 of the hot/cold water passage unit 110a of the movable valve element 110 to be large when the movable valve element 110 is at the valve-closed position P104 (see Fig. 36), water shutoff can be ensured, and it is possible to prevent water from leaking through the water outlet 6a of the spout 6.

On the other hand, when the movable valve element 110 is at the valve-opening position P105 (see Fig. 37) in the state in which the handle lever 4 is placed at the operating position P3 that is frequently used and positioned substantially in the center on the front side, it is possible to decrease the distance between the inner edge 138 of the hot water channel 112a of the stationary valve element 112 and the hot water channel side edge 136 of the hot/cold water passage unit 110a of the movable valve element 110 as much as possible, and a cross-sectional area of a flow channel of the hot water channel 112a of the stationary valve element 112 can be set to be large. Therefore, in the case in which the movable valve element 110 is at the valve-opening position P105 (see Fig. 37), as illustrated in Fig. 2 and Fig. 38, when the handle lever 4 is turned by the turning operation to the hot-water side operating position P1 from the operating position P3 that is positioned substantially in the center on the front side, an area of a portion at which the hot water channel 112a of the stationary valve element 112 and the hot/cold water passage unit 110a of the movable valve element 110 are communicated with each other can be increased, and it is possible to further increase the flow rate of hot water that flows from the hot water channel 112a of the stationary valve element 112 to the hot/cold water passage unit 110a of the movable valve element 110 (see Fig. 38).

According to the water mixing valve device 100 of the second embodiment of the present invention described above, the stationary valve element 112 includes the first region r101 and the second region r102; the first region r101 is defined so as to be enclosed by the inner edge 132 on the side of the center O of the lower casing member 114 of the cold water channel 112b, the central axis A102 extending in the front-back direction of the stationary valve element 112, and the perpendicular line V101 from the rear end 132a of the inner edge 132 of the cold water channel 112b to the central axis A102, and the second region r102 is provided symmetrically with respect to the first region r101 taking the central axis A102 of the stationary valve element 112 as the symmetry axis. Further, the partial region h101 of the hot water channel 112a of the stationary valve element 112 is provided within the second region r102. Accordingly, the hot water channel 112a of the stationary valve element 112 can be positioned closer to the central axis A102 of the stationary valve element 112 without providing the hot water channel 112a and the cold water channel 112b of the stationary valve element 112 symmetrically with respect to the central axis A102 of the stationary valve element 112. Therefore, as compared to the case in which the hot water channel 112a of the stationary valve element 112 is not positioned closer to the central axis A102 of the stationary valve element 112, it is possible to increase the flow rate of hot water that flows through the hot water channel 112a of the stationary valve element 112 when opening the movable valve element 110 to discharge mixed water. Thus, it is possible to achieve the user friendliness, as when the handle lever 4 is at the discharge operation position P3 that is frequently used, only water can be discharged while securing a sufficient amount of water to be discharged from the water outlet 6a of the spout 6, and the flow rate of hot water that flows through the hot water channel 112a of the stationary valve element 112 can be increased when opening the movable valve element 110 to discharge mixed water.

Further, according to the water mixing valve device 100 of this embodiment, the stationary valve element 112 includes the third region r103 and the fourth region r104; the third region r103 is defined so as to be enclosed by the cold water channel side edge 134 of the hot/cold water passage unit 110a of the movable valve element 110, the central axis A102 of the stationary valve element 112, and the perpendicular line V101 from the rear end 132a of the inner edge 132 of the cold water channel 112b to the central axis A102, and the fourth region r104 is provided symmetrically with respect to the third region r103 taking the central axis A102 of the stationary valve element 112 as the symmetry axis. Further, as illustrated in Fig. 36 through Fig. 38, the partial region of the hot water channel side edge 136 of the hot/cold water passage unit 110a of the movable valve element 110 can be provided within the fourth region r104. Accordingly, the hot water channel 112a of the stationary valve element 112 is positioned closer to the central axis A102 of the stationary valve element 112 without providing the hot water channel 112a and the cold water channel 112b of the stationary valve element 112 symmetrically with respect to the central axis A102 of the stationary valve element 112. Therefore, as compared to the case in which the hot water channel 112a of the stationary valve element 112 is not positioned closer to the central axis A102 of the stationary valve element 112, it is possible to increase the flow rate of hot water that flows through the hot water channel 112a of the stationary valve element 112 when opening the movable valve element 110 to discharge mixed water (see Fig. 38).

Moreover, according to the water mixing valve device 100 of this embodiment, the inner edge 138 of the hot water channel 112a of the stationary valve element 112 includes the first stepped portion 140 and the second stepped portion 142, and hot water channel side edge 136 of the hot/cold water passage unit 110a of the movable valve element 110 includes the stepped portion 144 provided so as to connect the rear end of the first hot water channel side edge 136a and the front end of the second hot water channel side edge 136b. In addition, when the open/close operation of the movable valve element 110 is performed in the state in which the handle lever 4 is placed at the operating position P3 that is frequently used and positioned substantially in the center on the front side, the distance d101 between the inner edge 138 of the hot water channel 112a of the stationary valve element 112 and the hot water channel side edge 136 of the hot/cold water passage unit 110a of the movable valve element 110 where the inner edge 138 and the hot water channel side edge 136 are closest when the movable valve element 110 is at the valve-opening position P105 (see Fig. 37) is set to be smaller than the distance d102 between the inner edge 138 of the hot water channel 112a of the stationary valve element 112 and the hot water channel side edge 136 of the hot/cold water passage unit 110a of the movable valve element 110 where the inner edge 138 and the hot water channel side edge 136 are closest when the movable valve element 110 is at the valve-closed position P104 (see Fig. 36).

With this, in the state in which the handle lever 4 is placed at the operating position P3 that is frequently used and positioned substantially in the center on the front side, as it is possible to maintain the distance between the inner edge 138 of the hot water channel 112a of the stationary valve element 112 and the hot water channel side edge 136 of the hot/cold water passage unit 110a of the movable valve element 110 to be larger when the movable valve element 110 is at the valve-closed position P104 (see Fig. 36) than when the movable valve element 110 is at the valve-opening position P105 (see Fig. 37). Therefore, it is possible to ensure water shutoff, and to prevent water from leaking through the water outlet 6a of the spout 6.

On the other hand, when the movable valve element 110 is at the valve-opening position P105 (see Fig. 37) in the state in which the handle lever 4 is placed at the operating position P3 that is frequently used and positioned substantially in the center on the front side, it is possible to decrease the distance between the inner edge 138 of the hot water channel 112a of the stationary valve element 112 and the hot water channel side edge 136 of the hot/cold water passage unit 110a of the movable valve element 110 as much as possible, and thus a cross-sectional area of a flow channel of the hot water channel 112a of the stationary valve element 112 can be set to be large. Therefore, by performing the open/close operation of the movable valve element 110 in the state in which the handle lever 4 is placed at the operating position P3 that is frequently used and positioned substantially in the center on the front side, it is possible to discharge or stop discharging only cold water from the water outlet 6a of the spout 6. In addition, in the state in which only cold water is discharged in this manner (see Fig. 37), when the handle lever 4 is turned by the turning operation to the hot-water side operating position P1 from the operating position P3 that is positioned substantially in the center on the front side (see Fig. 38), the area of the portion through which the hot water channel 112a of the stationary valve element 112 and the hot/cold water passage unit 110a of the movable valve element 110 are communicated with each other can be further increased, and it is possible to further increase the flow rate of hot water that flows from the hot water channel 112a of the stationary valve element 112 to the hot/cold water passage unit 110a of the movable valve element 110.

## Claims

1. A water mixing valve device (1,100) built within a water mixing faucet (2), and configured to either discharge or stop discharging mixed water in which hot water supplied from a hot-water supply source and cold water supplied from a cold-water supply source are mixed, the water mixing valve device comprising:
a casing (14, 114) disposed upstream of a water outlet of the water mixing faucet;
a stationary valve element (12, 112) fixed within the casing, and having a hot water channel (12a, 112a) through which hot water supplied from the hot-water supply source flows and a cold water channel (12b, 112b) through which cold water supplied from the cold-water supply source flows;
a movable valve element (10, 110) disposed within the casing, configured to slide with respect to the stationary valve element to open and close the hot water channel and the cold water channel of the stationary valve element, and having therein a hot/cold water passage unit (10a, 110a) for letting hot water and cold water that have respectively passed through the hot water channel and the cold water channel to pass therethrough; and
an operating unit (22) having one end attached to the movable valve element such that the movable valve element is moved and an open/close operation of the movable valve element is performed to switch between water discharge and water shutoff, the operating unit adjusting a flow rate of mixed water downstream of the stationary valve element by the movable valve element moving between a predetermined valve-closed position for closing the hot water channel and the cold water channel of the stationary valve element and a predetermined valve-opening position for opening the hot water channel and/or the cold water channel by being operated in a plane vertical to a sliding surface of the movable valve element, the operating unit controlling a ratio of hot water and cold water mixed in the hot/cold water passage unit of the movable valve element to adjust temperature of the mixed water discharged from the water outlet of the water mixing faucet by a turning operation of the operating unit within an operation range in a plane parallel to the sliding surface of the movable valve element when the movable valve element is at the valve-opening position,
**characterized in that** the movable valve element is provided within the casing so as to slide, when the turning operation of the operating unit is performed, with respect to the stationary valve element in a sliding range in which an area of opening the movable valve element is larger than an area of closing the movable valve element,
the stationary valve element includes a first region and a second region, the first region being defined so as to be enclosed by a cold water channel inner edge (32, 132) provided within the cold water channel on a central side of the casing, a central axis (A2, A102) of the casing extending in the front-back direction of the stationary valve element, and a perpendicular line from one end of the cold water channel inner edge to the central axis, the second region being provided symmetrically with respect to the first region taking the central axis as a symmetry axis, and
at least a portion of the hot water channel of the stationary valve element is within the second region.

2. The water mixing valve device according to claim 1, wherein
the hot/cold water passage unit of the movable valve element includes a cold water channel side edge (34, 134) provided for the stationary valve element on a side of the cold water channel and a hot water channel side edge (36, 136) provided for the stationary valve element on a side of the hot water channel so as to face against the cold water channel side edge,
the stationary valve element further includes a third region and a fourth region, the third region being defined so as to be enclosed by the cold water channel side edge of the hot/cold water passage unit of the movable valve element, the central axis, and the perpendicular line, the fourth region being provided symmetrically with respect to the third region taking the central axis as a symmetry axis, and
at least a portion of the hot water channel side edge of the hot/cold water passage unit of the movable valve element is within the fourth region.

3. The water mixing valve device according to claim 1 or 2, wherein
the hot water channel of the stationary valve element includes a mixed water passage side edge (38, 138) provided for the movable valve element on a side of the hot/cold water passage unit, and
when the open/close operation of the movable valve element is performed in a state in which the operating unit is turned by the turning operation to a front side of the casing in the plane parallel to the sliding surface of the movable valve element, a distance between the mixed water passage side edge and the hot water channel side edge of the movable valve element is smaller when the movable valve element is at a valve-opening position than when the movable valve element is at a valve-closed position.

4. The water mixing valve device according to claim 3, wherein
both of the mixed water passage side edge of the hot water channel of the stationary valve element and the hot water channel side edge of the movable valve element are inclined so as to become closer to the central axis toward a direction in which the movable valve element moves from the valve-closed position to the valve-opening position.

5. The water mixing valve device according to claim 3, wherein
the mixed water passage side edge of the hot water channel of the stationary valve element includes a first mixed water passage side edge positioned proximally to the central axis, a second mixed water passage side edge positioned distally from the central axis as compared to the first mixed water passage side edge, and a first stepped portion (140, 142) defined by the first mixed water passage side edge and the second mixed water passage side edge, and
the hot water channel side edge of the hot/cold water passage unit of the movable valve element includes a first hot water channel side edge (136a) positioned proximally to the central axis, a second hot water channel side edge (136b) positioned distally from the central axis as compared to the first hot water channel side edge, and a second stepped portion (144) defined by the first hot water channel side edge and the second hot water channel side edge.

## Patentansprüche

1. Wassermisch-Ventilvorrichtung (1, 100), eingebaut in eine Wassermischhahn (2), und konfiguriert, um entweder Mischwasser, in dem heißes Wasser, versorgt von einer Heißwasser-Versorgungsquelle, und kaltes Wasser, versorgt von eine Kaltwasser-Versorgungsquelle, gemischt sind, abzugeben oder die Abgabe davon zu stoppen, wobei die Wassermisch-Ventilvorrichtung Folgendes umfasst:
ein Gehäuse (14, 114), das vorgelagert von einem Wasserauslass der Wassermischhahn angeordnet ist;
ein stationäres Ventilelement (12, 112), das innerhalb des Gehäuses fixiert ist, und aufweisend einen Heißwasserkanal (12a, 112a), durch das heiße Wasser, versorgt von der Heißwasser-Versorgungsquelle, fließt, und einen Kaltwasserkanal (12b, 112b), durch das Kaltwasser, versorgt von der Kaltwasser-Versorgungsquelle, fließt;
ein bewegliches Ventilelement (10, 110), das innerhalb des Gehäuses angeordnet ist, das konfiguriert ist, um mit Bezug auf das stationäre Ventilelement zu gleiten, um den Heißwasserkanal und den Kaltwasserkanal des stationären Ventilelements zu öffnen und zu schließen, und aufweisend darin eine Heiß-/Kaltwasser-Durchgangseinheit (10a, 110a), um Heißwasser und Kaltwasser, die jeweils durch den Heißwasserkanal und den Kaltwasserkanal passiert sind, dadurch passieren zu lassen; und
eine Betätigungseinheit (22), umfassend ein Ende an das bewegliche Ventilelement befestigt ist, so dass das bewegliche Ventilelement bewegt wird und eine Öffnungs-/Verschlussbetätigung des beweglichen Ventilelements durchgeführt wird, um zwischen Wasserabgabe und Wasserverschluss zu schalten, wobei die Betätigungseinheit eine Durchflussrate von Mischwasser nachgelagert vom stationären Ventilelement durch das bewegliche Ventilelement einstellt, das sich zwischen einer vorbestimmten Ventilverschlussposition zum Verschließen des Heißwasserkanals und des Kaltwasserkanals des stationären Ventilelements und einer vorbestimmten Ventilöffnungsposition zum Öffnen des Heißwasserkanals und/oder des Kaltwasserkanals bewegt, indem sie in einer Ebene vertikal zu einer Gleitfläche des beweglichen Ventilelements betrieben werden, wobei die Betätigungseinheit ein Verhältnis von heißem Wasser und kaltem Wasser steuert, das in der Heiß-/Kaltwasser-Durchgangseinheit des beweglichen Ventilelements gemischt wurde, um die Temperatur des Mischwassers einzustellen, das vom Wasserauslass der Wassermischhahn durch eine Drehbetätigung der Betätigungseinheit innerhalb eines Betätigungsbereichs auf einer Ebene parallel zu der Gleitfläche des beweglichen Ventilelements abgegeben wird, wenn sich das bewegliche Ventilelement in einer Ventilöffnungsposition befindet,
**dadurch gekennzeichnet, dass** das bewegliche Ventilelement innerhalb des Gehäuses bereitgestellt ist, um, wenn die Drehbetätigung der Betätigungseinheit durchgeführt wird, mit Bezug auf das stationäre Ventilelement in einem Gleitbereich zu gleiten, in dem ein Bereich zur Öffnung des beweglichen Ventilelements größer als einen Bereich zum Verschluss des beweglichen Ventilelements ist,
das stationäre Ventilelement eine erste Region und eine zweite Region einschließt, wobei die erste Region derart definiert ist, dass sie durch eine Kaltwasserkanal-Innenkante (32, 132) eingeschlossen ist, die innerhalb des Kaltwasserkanals auf einer zentralen Seite des Gehäuses bereitgestellt ist, wobei sich eine zentrale Achse (A2, A102) des Gehäuses in der Vorne-Hinten-Richtung des stationären Ventilelements und einer senkrechte Linie von einem Ende der Kaltwasserkanal-Innenkante zur zentralen Achse erstreckt, wobei die zweite Region symmetrisch mit Bezug auf die erste Region bereitgestellt ist, die die zentrale Achse als eine Symmetrieachse verwendet, und
mindestens ein Abschnitt des Heißwasserkanals des stationären Ventilelements in der zweiten Region liegt.

2. Wassermisch-Ventilvorrichtung nach Anspruch 1, wobei die Heiß-/Kaltwasserdurchgangseinheit des beweglichen Ventilelements eine Kaltwasserkanal-Seitenkante (34, 134), die für das stationäre Ventilelement auf einer Seite des Kaltwasserkanals bereitgestellt ist, und eine Heißwasserkanal-Seitenkante (36, 136) einschließt, die für das stationäre Ventilelement auf einer Seite des Heißwasserkanals bereitgestellt ist, um gegenüber der Kaltwasserkanal-Seitenkante zu liegen,
wobei das stationäre Ventilelement weiter eine dritte Region und eine vierte Region einschließt, wobei die dritte Region derart definiert ist, dass sie von der Kaltwasserkanal-Seitenkante der Heiß-/Kaltwasserdurchgangseinheit des beweglichen Ventilelements, der zentralen Achse und der senkrechtem Linie eingeschlossen ist, die vierte Region symmetrisch mit Bezug auf die dritte Region bereitgestellt ist, die die zentrale Achse als eine Symmetrieachse verwendet, und
mindestens ein Abschnitt der Seitenkante des Heißwasserkanals der Heiß-/Kaltwasser-Durchgangseinheit des beweglichen Ventilelements innerhalb der vierten Region liegt.

3. Wassermisch-Ventilvorrichtung nach Anspruch 1 oder 2, wobei der Heißwasserkanal des stationären Ventilelements eine Mischwasserdurchgang-Seitenkante (38, 138) einschließt, die für das bewegliche Ventilelement auf einer Seite der Heiß-/Kaltwasserdurchgangseinheit bereitgestellt ist, und
wenn die Öffnungs-/Verschlussbetätigung des beweglichen Ventilelements in einem Zustand durchgeführt wird, in dem die Betätigungseinheit durch die Drehbetätigung auf eine vordere Seite des Gehäuses auf der Ebene parallel zu der Gleitfläche des beweglichen Ventilelements gedreht wird, ein Abstand zwischen der Mischwasserdurchgang-Seitenkante und der Heißwasserkanal-Seitenkante des beweglichen Ventilelements kleiner ist, wenn sich das bewegliche Ventilelement in einer Ventilöffnungsposition befindet, als wenn sich das bewegliche Ventilelement in einer Ventilverschlussposition befindet.

4. Wassermisch-Ventilvorrichtung nach Anspruch 3, wobei sowohl die Mischwasserdurchgang-Seitenkante des Heißwasserkanals des stationären Ventilelements als auch die Heißwasserkanal- Seitenkante des beweglichen Ventilelements geneigt sind, um näher zur zentralen Achse hin zu einer Richtung zu gelangen, in der sich das bewegliche Ventilelement von der Ventilverschlussposition in die Ventilöffnungsposition bewegt.

5. Wassermisch-Ventilvorrichtung nach Anspruch 3, wobei die Mischwasserdurchgang-Seitenkante des Heißwasserkanals des stationären Ventilelements eine erste Mischwasserdurchgang-Seitenkante einschließt, die proximal zur zentralen Achse positioniert ist, eine zweite Mischwasserdurchgang-Seitenkante, die distal von der zentralen Achse im Vergleich zu ersten Mischwasserdurchgang-Seitenkante positioniert ist, und einen ersten abgestuften Abschnitt (140, 142), der von der ersten Mischwasserdurchgang-Seitenkante eine zweite Mischwasserdurchgang-Seitenkante definiert ist, und
die Heißwasserkanal-Seitenkante der Heiß-/Kaltwasserdurchgangseinheit des beweglichen Ventilelements eine erste Heißwasserkanal-Seitenkante (136a) einschließt, die proximal zur zentralen Achse positioniert ist, eine zweite Heißwasserkanal-Seitenkante (136b), die distal von der zentralen Achse positioniert ist, verglichen mit der ersten Heißwasserkanal-Seitenkante, und einen zweiten abgestuften Abschnitt (144), der durch die erste Heißwasserkanal-Seitenkante und die zweite Heißwasserkanal-Seitenkante definiert ist.

## Revendications

1. Dispositif mitigeur (1, 100) intégré dans un robinet mitigeur (2), et configuré soit pour décharger, soit pour arrêter la décharge d'eau mélangée dans lequel l'eau chaude fournie à partir d'une source d'alimentation en eau chaude et l'eau froide fournie à partir d'une source d'alimentation en eau froide sont mélangées, le dispositif mitigeur comprenant
un boîtier (14, 114) disposé en amont d'une sortie d'eau du robinet mitigeur ;
un élément de vanne fixe (12, 112) fixé dans le boîtier, et comportant un canal d'eau chaude (12a, 112a) à travers lequel l'eau chaude fournie à partir de la source d'alimentation en eau chaude s'écoule et un canal d'eau froide (12b, 112b) à travers lequel l'eau froide fournie à partir de la source d'alimentation en eau froide s'écoule ;
un élément de vanne mobile (10, 110) disposé dans le boîtier, configuré pour coulisser par rapport à l'élément de vanne fixe pour ouvrir et fermer le canal d'eau chaude et le canal d'eau froide de l'élément de vanne fixe, et comportant dans celui-ci une unité de passage d'eau chaude/froide (10a, 110a) pour laisser l'eau chaude et l'eau froide qui sont respectivement passées à travers le canal d'eau chaude et le canal d'eau froide passer à travers celle-ci ; et
une unité d'actionnement (22) ayant une extrémité fixée à l'élément de vanne mobile de sorte que l'élément de vanne mobile soit déplacé et qu'une opération d'ouverture/fermeture de l'élément de vanne mobile soit effectuée pour commuter entre la décharge d'eau et la coupure de l'eau, l'unité d'actionnement ajustant un débit de l'eau mélangée en aval de l'élément de vanne fixe par le déplacement de l'élément de vanne mobile entre une position de vanne fermée prédéterminée pour fermer le canal d'eau chaude et le canal d'eau froide de l'élément de vanne fixe et une position d'ouverture de vanne prédéterminée pour ouvrir le canal d'eau chaude et/ou le canal d'eau froide en étant actionné dans un plan vertical à une surface de coulissement de l'élément de vanne mobile, l'unité d'actionnement commandant un rapport entre l'eau chaude et l'eau froide mélangées dans l'unité de passage d'eau chaude/froide de l'élément de vanne mobile pour ajuster la température de l'eau mélangée déchargée de la sortie d'eau du robinet mitigeur par une opération de rotation de l'unité d'actionnement dans une plage d'actionnement dans un plan parallèle à la surface de coulissement de l'élément de vanne mobile lorsque l'élément de vanne mobile est à la position d'ouverture de vanne,
**caractérisé en ce que** l'élément de vanne mobile est prévu dans le boîtier de manière à coulisser, lorsque l'opération de rotation de l'unité d'actionnement est effectuée, par rapport à l'élément de vanne fixe dans une plage de coulissement dans laquelle une aire d'ouverture de l'élément de vanne mobile est plus grande qu'une aire de fermeture de l'élément de vanne mobile,
l'élément de vanne fixe comprend une première région et une deuxième région, la première région étant définie de manière à être fermée par un bord intérieur de canal d'eau froide (32, 132) prévu dans le canal d'eau froide sur un côté central du boîtier, un axe central (A2, A102) du boîtier s'étendant dans la direction avant-arrière de l'élément de vanne fixe, et une ligne perpendiculaire d'une extrémité du bord intérieur de canal d'eau froide à l'axe central, la deuxième région étant prévue symétriquement par rapport à la première région en prenant l'axe central en tant qu'axe de symétrie, et
au moins une partie du canal d'eau chaude de l'élément de vanne fixe est dans la deuxième région.

2. Dispositif mitigeur selon la revendication 1, dans lequel
l'unité de passage d'eau chaude/froide de l'élément de vanne mobile comprend un bord latéral de canal d'eau froide (34, 134) prévu pour l'élément de vanne fixe d'un côté du canal d'eau froide et un bord latéral de canal d'eau chaude (36, 136) prévu pour l'élément de vanne fixe d'un côté du canal d'eau chaude de manière à faire face au bord latéral de canal d'eau froide,
l'élément de vanne fixe comprend en outre une troisième région et une quatrième région, la troisième région étant définie de manière à être fermée par le bord latéral de canal d'eau froide de l'unité de passage d'eau chaude/froide de l'élément de vanne mobile, l'axe central, et la ligne perpendiculaire, la quatrième région étant prévue symétriquement par rapport à la troisième région en prenant l'axe central en tant qu'axe de symétrie, et
au moins une partie du bord latéral de canal d'eau chaude de l'unité de passage d'eau chaude/froide de l'élément de vanne mobile est dans la quatrième région.

3. Dispositif mitigeur selon la revendication 1 ou 2, dans lequel
le canal d'eau chaude de l'élément de vanne fixe comprend un bord latéral de passage d'eau mélangée (38, 138) prévu pour l'élément de vanne mobile d'un côté de l'unité de passage d'eau chaude/froide, et
lorsque l'opération d'ouverture/fermeture de l'élément de vanne mobile est effectuée dans un état dans lequel l'unité d'actionnement est tournée par l'opération de rotation vers un côté avant du boîtier dans le plan parallèle à la surface de coulissement de l'élément de vanne mobile, une distance entre le bord latéral de passage d'eau mélangée et le bord latéral de canal d'eau chaude de l'élément de vanne mobile est plus petite lorsque l'élément de vanne mobile est à une position d'ouverture de vanne que lorsque l'élément de vanne mobile est à une position de vanne fermée.

4. Dispositif mitigeur selon la revendication 3, dans lequel
le bord latéral de passage d'eau mélangée du canal d'eau chaude de l'élément de vanne fixe et le bord latéral de canal d'eau chaude de l'élément de vanne mobile sont inclinés de manière à se rapprocher de l'axe central dans une direction dans laquelle l'élément de vanne mobile se déplace de la position de vanne fermée à la position d'ouverture de vanne.

5. Dispositif mitigeur selon la revendication 3, dans lequel
le bord latéral de passage d'eau mélangée du canal d'eau chaude de l'élément de vanne fixe comprend un premier bord latéral de passage d'eau mélangée positionné à proximité de l'axe central, un deuxième bord latéral de passage d'eau mélangée positionné à distance de l'axe central comparé au premier bord latéral de passage d'eau mélangée, et une première partie étagée (140, 142) définie par le premier bord latéral de passage d'eau mélangée et le deuxième bord latéral de passage d'eau mélangée, et
le bord latéral de canal d'eau chaude de l'unité de passage d'eau chaude/froide de l'élément de vanne mobile comprend un premier bord latéral de canal d'eau chaude (136a) positionné à proximité de l'axe central, un deuxième bord latéral de canal d'eau chaude (136b) positionné à distance de l'axe central comparé au premier bord latéral de canal d'eau chaude, et une deuxième partie étagée (144) définie par le premier bord latéral de canal d'eau chaude et le deuxième bord latéral de canal d'eau chaude.
